# EUROPÄISCHE PATENTSCHRIFT

(11) **EP 3 835 144 B1**
(45) Veröffentlichungstag und Bekanntmachung des Hinweises auf die Patenterteilung: **03.01.2024**
(21) Anmeldenummer: 20198024.0
(22) Anmeldetag: 24.09.2020
(51) Int. Cl.: B60R 25/24, B62J 27/00, G07C 9/00

(54) **SYSTEM MIT EINEM MOTORRAD UND EINER TRANSPORTABLEN FUNKVORRICHTUNG**
SYSTEM WITH A MOTORCYCLE AND A PORTABLE RADIO DEVICE
SYSTÈME DOTÉ D'UN MOTOCYCLE ET D'UN DISPOSITIF RADIO POUVANT ÊTRE TRANSPORTÉ

(30) Priorität: 11.12.2019 DE 102019134001
(43) Veröffentlichungstag der Anmeldung: 16.06.2021
(73) Patentinhaber: KTM AG, 5230 Mattighofen (AT)
(72) Erfinder: KLAUSHOFER, Markus, 5330 Fuschl am See (AT); MORAWETZ, Thomas, 5202 Neumarkt am Wallersee (AT)
(74) Vertreter: Söllner, Udo

(56) Entgegenhaltungen:
- EP-A1- 3 318 704
- EP-A1- 3 470 275
- EP-A2- 3 115 284
- WO-A1-2019/043021
- DE-A1- 4 102 714
- DE-A1-102016 105 398
- DE-A1-102016 112 593
- DE-A1-102017 201 087

## Beschreibung

Die vorliegende Erfindung betrifft ein System mit einem Motorrad und einer transportablen Funkvorrichtung, wobei das Motorrad einen Motorradrahmen mit einer Lenckopflageraufnahme und eine Antriebseinheit sowie eine Schaltereinheit und eine Steuervorrichtung aufweist und die Steuervorrichtung zur drahtlosen Kommunikation mit der Funkvorrichtung und zur Steuerung von Betriebsmodi des Motorrads in Abhängigkeit einer von der Funkvorrichtung zur Steuervorrichtung übertragenen Authentifizierungsinformation eingerichtet ist und die Steuervorrichtung zur drahtlosen Übertragung einer die Funkvorrichtung in einen Ruhemodus versetzenden Sperrinformation zur Funkvorrichtung eingerichtet ist, in dem eine Kommunikation der Funkvorrichtung an die Steuervorrichtung unterbleibt, nach dem Oberbegriff des Anspruchs 1.

Bei dem Motorrad kann es sich um ein Straßenmotorrad oder auch um ein für die Fahrt im unwegsamen Gelände vorgesehenes Motorrad handeln oder auch um ein Geländesportmotorrad oder um ein zu anderen Zwecken vorgesehenes Motorrad.

Die bei dem hier vorgesehenen Motorrad vorgesehene Antriebseinheit kann ein Verbrennungsmotor oder auch ein Elektromotor oder auch eine andere Antriebseinheit sein, welche vom Benutzer des Motorrads aus einem Betriebsmodus, bei dem die Antriebseinheit keine Antriebsleistung zur Verfügung stellt, in einen Betriebsmodus gesetzt werden kann, bei dem die Antriebseinheit Antriebsleistung zur Verfügung stellt.

Bei einem Verbrennungsmotor wird diese hierzu von der Außerbetriebsstellung in die Betriebsstellung versetzt, der Verbrennungsmotor also gestartet, wozu vorher erforderlich ist, dass dem Zündungssystem des Verbrennungsmotors elektrische Energie zur Verfügung gestellt wird, wozu üblicherweise die Zündung in Betrieb gesetzt wird.

Bei einem Elektromotor als Antriebseinheit wird dafür gesorgt, dass das Bordspannungssystem in die Betriebsstellung versetzt wird, sodass das Bordspannungssystem oder ein am Motorrad vorgesehenes Hochspannungssystem in einen zur Bereitstellung von elektrischer Antriebsenergie an den Elektromotor liefernden Betriebsmodus versetzt wird.

Bislang war hierzu vorgesehen, dass der Benutzer des Motorrads einen Zündschlüssel, einen Schlüssel oder dergleichen in ein am Motorrad vorgesehenes Zündschloss steckt und gegebenenfalls betätigt und damit den Betriebsmodus herbeiführt, bei dem die Antriebseinheit in die Betriebsstellung versetzt wird.

Es sind auch bereits schlüssellose, sogenannte Komfortzugangssysteme bekannt geworden, bei denen der Benutzer das Fahrzeug ohne dass Einstecken und entsprechende Drehen eines mechanischen Schlüssels in ein Zündschloss oder dergleichen in Betrieb nehmen kann.

Bei einem solchen System ist üblicherweise eine Funkeinheit oder transportable Funkvorrichtung vorgesehen, die an eine am Motorrad vorgesehene Steuervorrichtung eine Authentifizierungsinformation sendet, sodass nur dann, wenn die von der Steuervorrichtung empfangene Authentifizierungsinformation von dieser als gültig überprüft wurde, der Betriebsmodus herbeigeführt werden kann, dem die Antriebseinheit Antriebsenergie bereitstellen kann, also beispielsweise der Benutzer des Motorrads den Verbrennungsmotor starten kann.

Ein solches System weist für den Benutzer Komfortmerkmale auf, da es entfällt, dass der Benutzer einen Zündschlüssel handhaben muss, was bei einem Motorradfahrer als Benutzer von Vorteil ist, da dieser zur Handhabung des Zündschlüssels üblicherweise seine Handschuhe ausziehen muss, da die Handhabung des oftmals kleinen Zündschlüssels mit solchen Handschuhen umständlich und schwierig ist.

Ein anderes Komfortmerkmal besteht beispielsweise darin, dass über am Motorrad vorgesehene Sensoreinrichtungen festgestellt werden kann, dass sich der Benutzer auf das Motorrad gesetzt hat oder seine Hände an die Lenkstange gelegt hat und somit ein vom Benutzer eingeleiteter Startvorgang des Verbrennungsmotors oder die Herbeiführung des Betriebsmodus der Antriebseinheit, bei der diese ganz allgemein Antriebsenergie bereitstellt, vom Komfortsystem als gültig identifiziert wird und vom System zugelassen wird.

Ein solches schlüsselloses Komfortsystem arbeitet üblicherweise mit einer drahtlosen Funkkommunikation zwischen der Steuervorrichtung und der transportablen Funkvorrichtung, die den bekannten Zündschlüssel ersetzt.

Bei einer solchen Kommunikation wird von der Steuervorrichtung an die transportable Funkvorrichtung eine Information übertragen und die Funkvorrichtung sendet eine Quittungsinformation oder Authentifizierungsinformation an die Steuervorrichtung.

Solche Systeme sind daher anfällig für sogenannte Relayattacken, bei denen die Kommunikation zwischen der Steuervorrichtung und der transportablen Funkvorrichtung über vom Benutzer nicht autorisierte Systeme mitprotokolliert werden kann, sodass eine nicht autorisierte transportable Funkvorrichtung dann entsprechende nicht autorisierte Authentifizierungsinformationen an die Steuervorrichtung senden kann, und so ein Missbrauch des Systems aus Motorrad und transportabler Funkvorrichtung möglich ist.

Anhand der WO 2019/043021 A1 ist ein Motorrad mit einem schlüssellosen Komfortzugangssystem bekannt geworden, welches über am Motorrad vorgesehene Sensoren einzelne Handlungen des Benutzers des Motorrads erkennen kann.

Anhand der EP 3470275 A1 ist ein drahtloses Kommunikationssystem für die Verwendung zwischen einem Fahrzeug und einer transportablen Funkvorrichtung bekannt geworden, welches dazu vorgesehen ist, die Gefahr von Relayattacken zwischen dem Fahrzeug und der transportablen Funkvorrichtung zu verringern, ohne den Benutzer mit Komforteinbußen zu belasten.

DE 10 2016 112593 A1 offenbart ein Verfahren zum Betrieb eines Schließsystems für ein Kraftfahrzeug, tragbarer ID-Geber für ein Kraftfahrzeug und Schließsystem.

Ausgehend hiervon liegt der vorliegenden Erfindung die Aufgabe zugrunde, ein System mit einem Motorrad und einer transportablen Funkvorrichtung zu schaffen, welches die Sicherheit gegen einen unautorisierten Zugriff auf das System erhöht und die Gefahr des unautorisierten Abhörens der Kommunikation zwischen der Steuervorrichtung und der Funkvorrichtung verringert, ohne für den Benutzer des Systems Komforteinbußen zu schaffen.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft ein System mit einem Motorrad und einer transportablen Funkvorrichtung, wobei das Motorrad einen Motorradrahmen mit einer Lenkkopflageraufnahme und eine Antriebseinheit sowie eine Schaltereinheit und eine Steuervorrichtung aufweist und die Steuervorrichtung zur drahtlosen Kommunikation mit der Funkvorrichtung und zur Steuerung von Betriebsmodi des Motorrads in Abhängigkeit einer von der Funkvorrichtung zur Steuervorrichtung übertragenen Authentifizierungsinformation eingerichtet ist und die Steuervorrichtung zur drahtlosen Übertragung einer die Funkvorrichtung in einen Ruhemodus versetzenden Sperrinformation zur Funkvorrichtung eingerichtet ist, in dem eine Kommunikation der Funkvorrichtung an die Steuervorrichtung unterbleibt, wobei die Steuervorrichtung zur drahtlosen Übertragung einer ersten und/oder zweiten Zeitintervallinformation betreffend die Länge eines ersten und/oder zweiten Zeitintervalls an die Funkvorrichtung eingerichtet ist, nach deren Ablauf die Funkvorrichtung den Ruhemodus einnimmt, sich also beispielsweise in den Ruhemodus versetzt.

Das nach dem erfindungsgemäßen System vorgesehene Motorrad weist also einen Motorradrahmen mit einer Lenkkopflageraufnahme auf sowie eine Antriebseinheit und eine Schaltereinheit und eine Steuervorrichtung. Die Schaltereinheit ist dafür vorgesehen, mittels einer Betätigung der Schaltereinheit Aktionen am Motorrad auszulösen, wie beispielsweise die Steuervorrichtung zur drahtlosen Kommunikation mit der transportablen Funkvorrichtung anzusteuern, oder verschiedene Betriebsmodi des Motorrads zu aktivieren.

Bei den Betriebsmodi des Motorrads kann es sich beispielsweise um das Einschalten des Zündungssystems der Antriebseinheit des Motorrads handeln, also beispielsweise das Motorrad in einen solchen Betriebszustand zu versetzen, dass eine elektrische Startvorrichtung einer Brennkraftmaschine des Motorrads aktiviert werden kann, also mit einem Startstrom aus dem Bordspannungsnetz versorgt werden kann oder dass ganz allgemein die Zündung freigegeben werden kann.

Ein weiterer Betriebsmodus, der von der Steuervorrichtung gesteuert werden kann, ist die Aktivierung und/oder Deaktivierung einer Lenkersperreinrichtung des Motorrads, die Aktivierung und/oder Deaktivierung einer Wegfahrsperreinrichtung des Motorrads, die Verriegelung und/oder Entriegelung eines Tankdeckels, welcher eine Kraftstoffeinfüllöffnung eines Kraftstofftanks des Motorrads verschließt oder freigibt, die Aktivierung und/oder Deaktivierung der Verriegelung eines Verschlusses einer Gepäckaufbewahrungseinrichtung des Motorrads, die Aktivierung und/oder Deaktivierung einer Verriegelung eines Verschlusses einer Sitzbankanordnung des Motorrads, die Aktivierung und/oder Deaktivierung einer Steuervorrichtung zur Inbetriebnahme der Antriebseinheit des Motorrads, um nur einige Beispiele in dieser nicht abschließenden Aufzählung zu nennen.

Mit der Schaltereinheit, die am Motorrad vorgesehen ist und hierzu beispielsweise an einer Steuereinrichtung des Motorrads in der Form der Lenkstange vorgesehen sein kann, können also Steuerbefehle oder Steuersequenzen an die Steuervorrichtung des Motorrads übertragen werden, sodass diese dann einzelne Betriebsmodi des Motorrads ansteuert, also aktiviert oder deaktiviert.

So ist es beispielsweise auch vorgesehen, dass eine Betätigung der Schaltereinheit dazu führt, dass das Zündungssystem des Motorrads deaktiviert wird, die Zündung einer als Verbrennungsmotor vorgesehenen Antriebseinheit des Motorrads also ausgeschaltet wird und somit der Verbrennungsmotor nicht mehr gestartet werden kann.

Mit dieser Deaktivierung des Zündungssystems der Antriebseinheit ist auch umfasst, dass ein Elektromotor, der als Antriebseinheit beim Motorrad vorgesehen ist, deaktiviert wird, also keine Antriebsleistung mehr zur Verfügung stellen kann, wozu er beispielsweise von dem am Motorrad zum Betrieb des Elektromotors vorgesehenen Hochspannungssystem getrennt wird.

Die Deaktivierung des Zündungssystems findet also dann statt, wenn ein Benutzer des Motorrads die Schaltereinheit betätigt, und durch diese Betätigung der Schaltereinheit wird die Steuervorrichtung auch dahingehend betätigt, dass diese eine Zeitinformation an die transportable Funkeinheit oder Funkvorrichtung überträgt und zwar eine Zeitinformation bezüglich eines ersten und/oder Zeitintervalls, die die Länge eines ersten und/oder zweiten Zeitintervalls umfasst, nach deren Ablauf die Funkvorrichtung den Ruhemodus einnimmt und somit keine Funkkommunikation von der Funkvorrichtung an die Steuervorrichtung mehr stattfindet und somit auch keine in dieser Funkkommunikation ansonsten enthaltene Authentifizierungsinformation mehr an die Steuervorrichtung übertragen wird und somit auch nicht mehr mittels eines nicht autorisierten Empfangsgerät, welches zu Relayattacken eingesetzt werden kann, abgefangen werden kann.

Die Betätigung der Schaltereinheit führt also dazu, dass die Funkvorrichtung eine konstante oder veränderbare oder am Motorrad einstellbare Zeitintervallinformation übertragen erhält, nach deren Ablauf sich die Funkvorrichtung automatisch in den Ruhemodus versetzt.

Bei dieser Zeitintervallinformation kann es sich um eine erste Zeitintervallinformation handeln, die von der Funkvorrichtung auswertbare Dateninformation umfasst, sodass sich die Funkvorrichtung nach Ablauf des ersten Zeitintervalls selbsttätig in den Ruhemodus versetzt, also keine Kommunikation mehr mit der Steuervorrichtung aufbaut.

Dieses erste Zeitintervall kann dazu genutzt werden, die automatische Deaktivierung der transportablen Funkvorrichtung nach Ablauf des ersten Zeitintervalls zu deaktivieren, wenn der Benutzer des Motorrads innerhalb des ersten Zeitintervalls feststellt, dass er den Befehl zur Deaktivierung der transportablen Funkvorrichtung versehentlich ausgelöst hat, was beispielsweise dann geschieht, wenn der Benutzer die Schaltereinheit versehentlich berührt hat, was bei einem Betrieb des Motorrads durch einen beispielsweise Motorradhandschuhe tragenden Benutzer in der Praxis durchaus geschehen kann.

Da die Reaktivierung einer zum Schutz gegen Relayattacken deaktivierten transportablen Funkvorrichtung eine andere Betätigung als die Betätigung der am Motorrad vorgesehenen Schaltereinheit voraussetzt, nämlich beispielsweise eine Aktivierung der als Funkschlüssel ausgebildeten transportablen Funkvorrichtung, und diese zu diesem Zweck vom Benutzer separat gehandhabt werden muss, indem der Benutzer eine Schaltereinheit an der transportablen Funkvorrichtung betätigt, ist die Möglichkeit des Widerrufs des versehentlichen Auslösens der Deaktivierung der transportablen Funkvorrichtung für den Benutzer des Motorrads von Vorteil und ein Zugewinn an Komfort, indem beispielsweise eine erneute Betätigung der Schaltereinheit innerhalb des ersten Zeitintervalls die automatische Deaktivierung der transportablen Funkvorrichtung unterbindet.

Es ist hierzu vorgesehen, dass der Benutzer des Motorrads nach der versehentlichen oder auch beabsichtigten Betätigung der Schaltereinheit, die zu einer automatischen Deaktivierung der transportablen Funkvorrichtung führen würde, eine Information in der Form beispielsweise einer visuellen oder akustischen Information über die Betätigung der Schaltereinheit an einer Displayeinheit oder Akustikeinheit des Motorrads erhält, sodass dem Benutzer die Möglichkeit gegeben wird, über eine erneute Betätigung der Schaltereinheit die Deaktivierung der transportablen Funkvorrichtung zu unterbinden.

Über diese visuelle und/oder akustische Information erfährt der Benutzer des Motorrads darüber hinaus eine Bestätigung oder Quittung der Aktivierung der Schaltereinheit des Motorrads, sodass er in die Lage versetzt wird, seine Entscheidung über die beabsichtigte Aktivierung des Ruhemodus der transportablen Funkvorrichtung zu widerrufen beziehungsweise die unbeabsichtigte Aktivierung des Ruhemodus aufzuheben, bevor die transportablen Funkvorrichtung in den tatsächlichen Ruhemodus eintritt.

In dem Ruhemodus reagiert dann die transportable Funkvorrichtung nicht mehr auf von der Steuervorrichtung an die Funkvorrichtung drahtlos übermittelte Anfragen, sodass auch keine Möglichkeit mehr besteht, die Kommunikation zwischen der Funkvorrichtung und der Steuervorrichtung unautorisiert mit zu protokollieren.

Wie es vorstehend bereits erwähnt wurde, ist das System dazu in der Lage, neben der ersten Zeitintervallinformation alternativ oder zusätzlich eine zweite Zeitintervallinformation an die Funkvorrichtung zu übertragen, welche eine Information bezüglich eines zweiten Zeitintervalls umfasst, nach dessen Ablauf sich die Funkvorrichtung in den Ruhemodus versetzt.

Wenn die transportable Funkvorrichtung wieder in den Modus der Kommunikation mit der Steuervorrichtung versetzt werden soll, ist es vorgesehen, dass der Benutzer den Funkschlüssel beziehungsweise die transportable Funkvorrichtung mittels eines Tastendrucks oder einer anderen Betätigung der transportablen Funkvorrichtung aktiviert, sodass der Funkschlüssel auf entsprechende Anfragen der Steuervorrichtung an den Transponder der transportablen Funkvorrichtung antwortet.

Dieses zweite Zeitintervall, während dessen die Kommunikation zwischen der transportablen Funkvorrichtung und der Steuervorrichtung wieder aufgenommen ist, kann nach der Erfindung einstellbar festgelegt werden und dient der Sicherheitserhöhung in der Kommunikation zwischen der transportablen Funkvorrichtung und der Steuervorrichtung.

Wenn nämlich das zweite Zeitintervall abgelaufen ist, ohne dass eine entsprechende Aktion des Benutzers am Motorrad vorgenommen wurde, versetzt sich die transportable Funkvorrichtung automatisch wieder in den Ruhemodus und unterbricht somit die Kommunikation mit der Steuervorrichtung.

Wenn der Benutzer des Motorrads nach dem erfindungsgemäß vorgesehenen System die transportable Funkvorrichtung in den Aktivmodus versetzt und diese ein Signal oder Signale an die Steuervorrichtung über die Aktivierung versandt hat, kann die erfindungsgemäße vorgesehene Steuervorrichtung einen einzelnen Betriebsmodus oder mehr als einen Betriebsmodus oder mehrere Betriebsmodi des Motorrads aktivieren, also beispielsweise das Motorrad startklar machen, indem das Zündungssignal T15 freigegeben wird und/oder eine Wegfahrsperre des Motorrads deaktiviert wird und oder eine Lenkersperreinrichtung des Motorrads freigegeben wird und/oder eine Verriegelung eines Tankdeckels eines Kraftstofftanks des Motorrads freigegeben wird und/oder eine Verriegelung eines am Motorrad angeordneten Topcases und/oder am Motorrad vorgesehenes Seitenkoffers freigegeben wird und/oder eine Verriegelungseinrichtung einer Sitzbankanordnung des Motorrads freigegeben wird und/oder die Steuervorrichtung als Main Unit eine Freigabe für den Motorstart erteilt.

Damit wird ein erheblicher Komfortgewinn für den Benutzer des Motorrads erreicht, da alle oder wenigstens die wesentlichen Betriebsmodi des Motorrads, die für den normalen Betrieb des Motorrads vorgesehen sind, mittels eines einzigen Tastendrucks oder einer einzelnen Betätigung am Funkschlüssel durch den Benutzer des Fahrers aktiviert werden können, ohne dass es eines weiteren Eingriffs des Fahrers am Motorrad bedürfte.

Es ist nach der Erfindung vorgesehen, dass der Benutzer des Motorrads die Aktivierung und/oder Deaktivierung einzelner Betriebsmodi des Motorrads beispielsweise über eine Displayeinheit konfigurieren kann und der Benutzer so Einfluss darauf hat, wie das Motorrad nach einer entsprechenden Aktivierung durch die Betätigung des Funkschlüssels reagiert.

Der Funkschlüssel beziehungsweise die transportable Funkvorrichtung wird vom Benutzer des Motorrads mit sich geführt, also üblicherweise beispielsweise in der Praxis in einer Jackentasche oder Hosentasche der Motorradbekleidung des Benutzers verwahrt.

Da ein solcher Verwahrort die nicht auszuschließende Möglichkeit einer unvorhergesehenen, nicht beabsichtigten Fehlbedienung des Schlüssels mit sich bringt, der Benutzer kann den Funkschlüssel beispielsweise unbeabsichtigt bei einem Griff in die Jackentasche aktivieren, in der sich der Funkschlüssel befindet, und der Funkschlüssel kann dann im Abstand zum Motorrad, bei dem der Benutzer des Motorrads dieses nicht im Blick hat, eine Authentifizierungsinformation an die Steuervorrichtung senden, obwohl dies vom Benutzer nicht gewünscht ist, versetzt sich die Funkvorrichtung nach Ablauf dieses einstellbaren zweiten Zeitintervalls automatisch wieder in den Ruhemodus, in dem eine Kommunikation der Funkvorrichtung mit der Steuervorrichtung unterbunden ist, und die Steuervorrichtung sorgt dafür, dass die für den normalen Betrieb des Motorrads benötigten Betriebsmodi wieder aufgehoben werden, also beispielsweise die Zündung ausgeschaltet wird und/oder die Wegfahrsperre aktiviert wird und/oder die Lenkersperreinrichtung aktiviert wird und/oder die Tankdeckelverriegelung aktiviert wird und/oder die Verriegelungseinrichtung am Topcase und einem oder beiden Seitenkoffern aktiviert wird und/oder die Verriegelungseinrichtung der Sitzbankanordnung aktiviert wird und/oder das Freigabesignal für den Motorstart durch die ECU oder der Steuervorrichtung aufgehoben wird.

Damit stellt das erfindungsgemäße System für den Benutzer des Motorrads nicht nur deutlich mehr Komfortmerkmale zur Verfügung als dies bei bekannten Systemen der Fall ist, sondern erhöht auch die Sicherheit des Systems gegen Fehlbedienungen und/oder Missbrauch durch Relayattacken oder Diebstahl.

Es ist nach einer Weiterbildung der Erfindung auch vorgesehen, dass die Steuervorrichtung zur gleichzeitigen oder konsekutiven Übertragung der Sperrinformation und der ersten und/oder zweiten Zeitintervallinformation an die Funkvorrichtung eingerichtet ist.

Damit kann das erfindungsgemäße System mit der ersten und/oder zweiten Zeitintervallinformation auch gleichzeitig die Sperrinformation an die transportable Funkvorrichtung übertragen, also bei einer Betätigung der Schaltereinheit durch den Benutzer des Motorrads entweder nur die erste und/oder zweite Zeitintervallinformation an die Funkvorrichtung übertragen oder auch eine beliebige Kombination aus der Sperrinformation und/oder ersten Zeitintervallinformation und/oder zweiten Zeitintervallinformation und zwar gleichzeitig oder nacheinander oder beispielsweise auch zwei der drei Informationen simultan und die dritte Information dann infolge der ersten Übertragung.

Es ist nach der erfindungsgemäßen System auch vorgesehen, dass die erste und/oder zweite Zeitintervallinformation nur dann zusammen mit der Sperrinformation oder vor der Sperrinformation oder nach der Sperrinformation übertragen wird, wenn an der ersten und/oder zweiten Zeitintervallinformation Änderungen durch den Benutzer des erfindungsgemäßen Systems vorgenommen worden sind, also beispielsweise das erste Zeitintervall und/oder zweite Zeitintervall durch den Benutzer des Systems geändert wurde.

Es ist nach einer Weiterbildung der Erfindung auch vorgesehen, dass das Motorrad dazu eingerichtet ist, die Steuervorrichtung in Folge einer Betätigung der Schaltereinheit zur drahtlosen Übertragung der Sperrinformation und/oder der Zeitintervallinformation anzusteuern. Dadurch kann der Benutzer des erfindungsgemäßen Systems durch eine einfache Betätigung der Schaltereinheit den Ruhemodus der transportablen Funkvorrichtung aktivieren, ohne dass eine komplexe Aktivierung des Ruhemodus beispielsweise über eine Tasteneingabe an einem zentralen Bediendisplay des Motorrads notwendig wäre.

Durch eine solche einfache Betätigung der Schaltereinheit kann der Benutzer des Motorrads nach dem System auch Betriebsmodi des Motorrads aktivieren, die beim Abstellen des Motorrads während einer Fahrpause oder nach Beendigung der Fahrstrecke normalerweise manuell vorgenommen werden, wie beispielsweise die Verriegelung der Lenkersperre, die Verriegelung des Tankdeckels, die Verriegelung der Gepäcktransporteinrichtungen am Motorrad, wie beispielsweise eines Topcases oder der Seitenkoffer oder andere Betriebsmodi. Der Benutzer erfährt daher nach einer Aktivierung der Schaltereinheit über eine Displayeinheit am Motorrad eine optische Rückmeldung oder auch eine akustische Rückmeldung und weiß, dass nach dem Ablauf des ersten Zeitintervalls die Funkvorrichtung automatisch in den Ruhemodus wechselt und die Steuervorrichtung am Motorrad die von Benutzer einstellbar ausgewählten Betriebsmodi des Motorrads ansteuert.

Es ist dabei zur weiteren Komforterhöhung für den Benutzer des erfindungsgemäßen Systems vorgesehen, dass die Steuervorrichtung zur veränderbaren Einstellung der ersten und/oder zweiten Zeitintervallinformation eingerichtet ist, sodass der Benutzer über einen einfache Bedienung beispielsweise an der Displayeinheit des Motorrads das erste und/oder zweite Zeitintervall verändern kann, beispielsweise gemäß dem Benutzer im normalen Betrieb des Motorrads geläufiger Routinen bei der Inbetriebnahme des Motorrads oder dem Abstellen des Motorrads nach dessen Benutzung.

Es ist nach einer Weiterbildung der Erfindung auch vorgesehen, dass die Steuervorrichtung zum drahtlosen Empfang einer von der Funkvorrichtung nach dem Empfang der Sperrinformation und/oder ersten und/oder zweiten Zeitintervallinformation übertragenen Empfangsquittungsinformation an die Steuervorrichtung eingerichtet ist.

Diese Weiterbildung des erfindungsgemäßen Systems sorgt dafür, dass die Steuervorrichtung eine Rückmeldung von der Funkvorrichtung über den bestimmungsgemäßen Empfang der von der Steuervorrichtung übersandten Informationen erhält. Es kann nach dem erfindungsgemäßen System auch vorgesehen sein, dass der Benutzer des Systems eine entsprechende Bestätigung in der Displayeinheit des Motorrads erfährt und es kann nach der Erfindung auch vorgesehen sein, dass der Benutzer auch eine Fehlermeldung in der Displayeinheit erhält, wenn diese Empfangsquittungsinformation von der Steuervorrichtung nicht ordnungsgemäß empfangen wurde, wobei es hierzu auch vorgesehen ist, dass eine solche Fehlermeldung erst nach einer weiteren Übertragung der Sperrinformation und/oder ersten und/oder zweiten Zeitintervallinformation an die transportable Funkvorrichtung erhält, die ohne bestimmungsgemäßen Empfang der Empfangsquittungsinformation durch die Steuervorrichtung erfolgte.

Nach Erhalt der Empfangsquittungsinformation durch die Steuervorrichtung kann diese die vorstehend erwähnten Betriebsmodi am Motorrad ansteuern, sodass beispielsweise die Lenkersperre verriegelt wird und somit das Motorrad gegen Diebstahl gut geschützt ist, da ein einfaches Wegschieben des so gesicherten Motorrads nicht mehr möglich ist.

Dies dient der weiteren Sicherheitserhöhung des Systems, da der Benutzer hiermit eine Information von System erhält, die ihn darüber informiert, dass die Funkübertragung von der Steuervorrichtung zur transportablen Funkvorrichtung beispielsweise durch ein Störsignal gezielt gestört wurde und daher der Benutzer sensibilisiert wurde dafür, dass er den Vorgang der Außerbetriebsstellung des Motorrads durch beispielsweise Verriegelung der Lenkersperre manuell durchführen muss.

Es ist nach einer Weiterbildung der Erfindung auch vorgesehen, dass die Funkvorrichtung zum Verlassen des Ruhemodus und zur drahtlosen Übertragung der Authentifizierungsinformation in Folge einer die Aktivierung der Funkvorrichtung auslösenden Betätigung der Funkvorrichtung durch einen Benutzer der Funkvorrichtung eingerichtet ist.

Somit kann der Benutzer die Funkvorrichtung aus dem Ruhemodus in den Aktivmodus umschalten, indem er eine einfache Betätigung einer Drucktaste oder dergleichen an der Funkvorrichtung durchführt und so dafür sorgt, dass die Kommunikation von der Funkvorrichtung zur Steuervorrichtung wieder initiiert wurde und somit die am Motorrad vorgesehene Steuervorrichtung das Motorrad in den Betriebsmodus "Betrieb" versetzen kann, also beispielsweise die Lenkersperreinrichtung entriegeln kann, die Wegfahrsperre deaktivieren kann, die Tankdeckelverriegelung freigeben kann, die Verriegelung der Gepäcktransporteinrichtungen am Motorrad aufheben kann und die Freigabe für den Motorstart erteilen kann.

Es ist nach einer Weiterbildung der Erfindung auch vorgesehen, dass die Steuervorrichtung zur drahtlosen Übertragung einer Betriebsmodusinformation an die Funkvorrichtung eingerichtet ist, nach deren Empfang die Funkvorrichtung in einem die Kommunikation mit der Steuervorrichtung aufrechterhaltenden Kommunikationsmodus verbleibt.

Diese Weiterbildung besitzt beispielsweise den Vorteil, dass die Funkvorrichtung in einen Kommunikationsmodus mit der Steuervorrichtung geschaltet werden kann, der andere Dateninformationen beinhaltet als die vorstehend erwähnten Authentifizierungsinformationen, sodass es unberechtigten Dritten schwieriger gemacht wird, die Authentifizierungsinformationen während eines normalen Betriebs des Systems in Erfahrung zu bringen.

Es ist nach einer Weiterbildung der Erfindung auch vorgesehen, dass die Steuervorrichtung zur drahtlosen Übertragung einer Betriebsmodusinformation an die Funkvorrichtung innerhalb des zweiten Zeitintervalls eingerichtet ist, nach deren Empfang die Funkvorrichtung in einem die Kommunikation mit der Steuervorrichtung aufrechterhaltenden Kommunikationsmodus verbleibt.

Diese Weiterbildung des Systems nach der Erfindung weist den Vorteil auf, dass die Betriebsmodusinformation an die Funkvorrichtung nur innerhalb eines zeitlich eng begrenzten Zeitintervalls übertragen wird, nämlich innerhalb des zweiten Zeitintervalls, sodass eine fortlaufende Übertragung der Betriebsmodusinformation an die Funkvorrichtung unterbleibt und somit der einen Missbrauch ermöglichende Daten- und Informationsaustausch zwischen der Steuervorrichtung und der transportablen Funkvorrichtung beschränkt wird.

Es ist nach einer Weiterbildung des erfindungsgemäßen Systems auch vorgesehen, dass das Motorrad eine Wegfahrsperreinrichtung aufweist, welches die Antriebseinheit des Motorrads in einen Betriebszustand versetzt, in dem eine Fortbewegung des Motorrads mit einer von der Antriebseinheit bereit gestellten Antriebsenergie unterbunden ist.

Die Aktivierung oder Deaktivierung der Wegfahrsperreinrichtung des Motorrads sind Betriebsmodi, welche die Steuervorrichtung unter anderem in Abhängigkeit der Kommunikation mit der transportablen Funkvorrichtung durchführen kann.

Der Benutzer des erfindungsgemäßen Systems kann die Schaltereinheit am Motorrad betätigen, sodass die Sperrinformation und/oder Zeitintervallinformation an die transportable Funkvorrichtung übertragen wird.

Nach Ablauf des ersten Zeitintervalls, während dessen der Benutzer des Systems die Aktivierung des Ruhemodus der Funkvorrichtung widerrufen kann, kann die Steuervorrichtung die Wegfahrsperreinrichtung des Motorrads automatisch aktivieren, sodass die von der Wegfahrsperreinrichtung bereitgestellte Diebstahlsicherung automatisch aktiviert wird. Alternativ hierzu ist es nach dem erfindungsgemäßen System auch vorgesehen, dass schon die Betätigung der Schaltereinheit durch den Benutzer die Wegfahrsperreinrichtung aktiviert und eine etwaige nochmalige Betätigung der Schaltereinheit durch den Benutzer innerhalb des ersten Zeitintervalls die Wegfahrsperreinrichtung wieder deaktiviert.

Wenn der Benutzer dann die transportable Funkvorrichtung wieder aktiviert und eine Authentifizierungsinformation an die Steuervorrichtung übertragen hat, kann die Steuervorrichtung die Wegfahrsperreinrichtung deaktivieren, sodass das Motorrad hinsichtlich der Wegfahrsperreinrichtung betriebsbereit wird.

Es ist nach einer Weiterbildung der Erfindung auch vorgesehen, dass das Motorrad eine Lenkersperreinrichtung aufweist, die mit einem fernsteuerbaren, insbesondere elektrisch betätigt verriegelbaren und entriegelbaren Bolzen versehen ist, der mit einer Ausnehmung der Lenkkopflageraufnahme in eine lösbare Eingriffsstellung bringbar ist und die Steuervorrichtung zur Überwachung der Eingriffsstellung eingerichtet ist.

Die Aktivierung oder Deaktivierung der Lenkersperreinrichtung des Motorrads sind Betriebsmodi, welche die Steuervorrichtung unter anderem in Abhängigkeit der Kommunikation mit der transportablen Funkvorrichtung durchführen kann.

Der Benutzer des erfindungsgemäßen Systems kann die Schaltereinheit am Motorrad betätigen, sodass die Sperrinformation und/oder Zeitintervallinformation an die transportable Funkvorrichtung übertragen wird.

Nach Ablauf des ersten Zeitintervalls, während dessen der Benutzer des Systems die Aktivierung des Ruhemodus der Funkvorrichtung widerrufen kann, kann die Steuervorrichtung die Lenkersperreinrichtung des Motorrads automatisch aktivieren, sodass die von der Lenkersperreinrichtung bereitgestellte Diebstahlsicherung automatisch aktiviert wird. Alternativ hierzu ist es nach dem erfindungsgemäßen System auch vorgesehen, dass schon die Betätigung der Schaltereinheit durch den Benutzer die Lenkersperreinrichtung aktiviert und eine etwaige nochmalige Betätigung der Schaltereinheit durch den Benutzer innerhalb des ersten Zeitintervalls die Lenkersperreinrichtung wieder deaktiviert.

Wenn der Benutzer dann die transportable Funkvorrichtung wieder aktiviert und eine Authentifizierungsinformation an die Steuervorrichtung übertragen hat, kann die Steuervorrichtung die Lenkersperreinrichtung deaktivieren, sodass das Motorrad hinsichtlich der Lenkersperreinrichtung betriebsbereit wird.

Es ist nach einer Weiterbildung der Erfindung auch vorgesehen, dass das Motorrad einen Kraftstofftank mit einer Kraftstoffeinfüllöffnung und mit einer die Kraftstoffeinfüllöffnung lösbar verschließenden Tankdeckelanordnung aufweist und die Tankdeckelanordnung mit einem fernsteuerbaren, insbesondere elektrisch betätigt verriegelbaren und entriegelbaren Bolzen versehen ist, der mit einer Ausnehmung des Kraftstofftanks in eine lösbare Eingriffsstellung bringbar ist und die Steuervorrichtung zur Überwachung der Eingriffsstellung eingerichtet ist.

Die Aktivierung oder Deaktivierung der Verriegelung der Tankdeckelanordnung des Motorrads sind Betriebsmodi, welche die Steuervorrichtung unter anderem in Abhängigkeit der Kommunikation mit der transportablen Funkvorrichtung durchführen kann.

Der Benutzer des erfindungsgemäßen Systems kann die Schaltereinheit am Motorrad betätigen, sodass die Sperrinformation und/oder Zeitintervallinformation an die transportable Funkvorrichtung übertragen wird.

Nach Ablauf des ersten Zeitintervalls, während dessen der Benutzer des Systems die Aktivierung des Ruhemodus der Funkvorrichtung widerrufen kann, kann die Steuervorrichtung die Verriegelung der Tankdeckelanordnung des Motorrads automatisch aktivieren, sodass die von der verriegelten Tankdeckelanordnung bereitgestellte Diebstahlsicherung automatisch aktiviert wird. Alternativ hierzu ist es nach dem erfindungsgemäßen System auch vorgesehen, dass schon die Betätigung der Schaltereinheit durch den Benutzer die Verriegelung der Tankdeckelanordnung aktiviert und eine etwaige nochmalige Betätigung der Schaltereinheit durch den Benutzer innerhalb des ersten Zeitintervalls die Verriegelung der Tankdeckelanordnung wieder deaktiviert.

Wenn der Benutzer dann die transportable Funkvorrichtung wieder aktiviert und eine Authentifizierungsinformation an die Steuervorrichtung übertragen hat, kann die Steuervorrichtung die Verriegelung der Tankdeckelanordnung deaktivieren, sodass das Motorrad hinsichtlich der Tankdeckelanordnung betriebsbereit wird.

Es ist nach einer Weiterbildung der Erfindung auch vorgesehen, dass das Motorrad eine Gepäckaufbewahrungseinrichtung aufweist, welche mit einem mit einer lösbaren verriegelbar ausgebildeten Verschlusseinrichtung versehen ist, die mit einem fernsteuerbaren, insbesondere elektrisch betätigt verriegelbaren und entriegelbaren Bolzen versehen ist, der mit einer Ausnehmung der Verschlusseinrichtung in eine lösbare Eingriffsstellung bringbar ist und die Steuervorrichtung zur Überwachung der Eingriffsstellung eingerichtet ist.

Die Aktivierung oder Deaktivierung der der Verriegelung der Gepäckaufbewahrungseinrichtung des Motorrads sind Betriebsmodi, welche die Steuervorrichtung unter anderem in Abhängigkeit der Kommunikation mit der transportablen Funkvorrichtung durchführen kann.

Nach Ablauf des ersten Zeitintervalls, während dessen der Benutzer des Systems die Aktivierung des Ruhemodus der Funkvorrichtung widerrufen kann, kann die Steuervorrichtung die Verriegelung der Gepäckaufbewahrungseinrichtung des Motorrads automatisch aktivieren, sodass die von der verriegelten Gepäckaufbewahrungseinrichtung bereitgestellte Diebstahlsicherung automatisch aktiviert wird. Alternativ hierzu ist es nach dem erfindungsgemäßen System auch vorgesehen, dass schon die Betätigung der Schaltereinheit durch den Benutzer die Verriegelung der Gepäckaufbewahrungseinrichtung aktiviert und eine etwaige nochmalige Betätigung der Schaltereinheit durch den Benutzer innerhalb des ersten Zeitintervalls die Verriegelung der Gepäckaufbewahrungseinrichtung wieder deaktiviert.

Wenn der Benutzer dann die transportable Funkvorrichtung wieder aktiviert und eine Authentifizierungsinformation an die Steuervorrichtung übertragen hat, kann die Steuervorrichtung die Verriegelung der Gepäckaufbewahrungseinrichtung deaktivieren, sodass das Motorrad hinsichtlich der Gepäckaufbewahrungseinrichtung betriebsbereit wird.

Es ist nach einer Weiterbildung der Erfindung auch vorgesehen, dass das Motorrad mit einer Sitzbankanordnung versehen ist, welche mit einem fernsteuerbaren, insbesondere elektrisch betätigt verriegelbaren und entriegelbaren Bolzen versehen ist, der mit einer am Motorradrahmen angeordneten Ausnehmung in eine lösbare Eingriffsstellung bringbar ist und die Steuervorrichtung zur Überwachung der Eingriffsstellung eingerichtet ist.

Die Aktivierung oder Deaktivierung der der Verriegelung der Sitzbankanordnung des Motorrads sind Betriebsmodi, welche die Steuervorrichtung unter anderem in Abhängigkeit der Kommunikation mit der transportablen Funkvorrichtung durchführen kann.

Der Benutzer des erfindungsgemäßen Systems kann die Schaltereinheit am Motorrad betätigen, sodass die Sperrinformation und/oder Zeitintervallinformation an die transportable Funkvorrichtung übertragen wird.

Nach Ablauf des ersten Zeitintervalls, während dessen der Benutzer des Systems die Aktivierung des Ruhemodus der Funkvorrichtung widerrufen kann, kann die Steuervorrichtung die Verriegelung der Sitzbankanordnung des Motorrads automatisch aktivieren, sodass die von der verriegelten Sitzbankanordnung bereitgestellte Diebstahlsicherung automatisch aktiviert wird. Alternativ hierzu ist es nach dem erfindungsgemäßen System auch vorgesehen, dass schon die Betätigung der Schaltereinheit durch den Benutzer die Verriegelung der Sitzbankanordnung aktiviert und eine etwaige nochmalige Betätigung der Schaltereinheit durch den Benutzer innerhalb des ersten Zeitintervalls die Verriegelung der Sitzbankanordnung wieder deaktiviert.

Wenn der Benutzer dann die transportable Funkvorrichtung wieder aktiviert und eine Authentifizierungsinformation an die Steuervorrichtung übertragen hat, kann die Steuervorrichtung die Verriegelung der Sitzbankanordnung deaktivieren, sodass das Motorrad hinsichtlich der Sitzbankanordnung betriebsbereit wird.

Es ist nach einer Weiterbildung der Erfindung auch vorgesehen, dass das Motorrad mit einer Steuervorrichtung zur Inbetriebnahme der Antriebseinheit des Motorrads versehen ist. Bei dieser Steuervorrichtung kann es sich beispielsweise um einen elektromotorisch betriebenen Starter für das Starten einer als Verbrennungsmotor ausgebildeten Antriebseinheit des Motorrads handeln. Daneben kann es sich bei dieser Steuervorrichtung auch um eine Einrichtung handeln, welche die Versorgung eines Elektromotors als Antriebseinheit des Motorrads mit elektrischer Energie aus dem Bordspannungsnetz oder einem Hochspannungsnetz des Motorrads zulässt oder unterbindet.

Die Aktivierung oder Deaktivierung der Inbetriebnahmemöglichkeit der Antriebseinheit des Motorrads sind Betriebsmodi, welche die Steuervorrichtung unter anderem in Abhängigkeit der Kommunikation mit der transportablen Funkvorrichtung durchführen kann.

Nach Ablauf des ersten Zeitintervalls, während dessen der Benutzer des Systems die Aktivierung des Ruhemodus der Funkvorrichtung widerrufen kann, kann die Steuervorrichtung die Inbetriebnahmemöglichkeit der Antriebseinheit des Motorrads automatisch deaktivieren, sodass die von der deaktivierten Antriebseinheit bereitgestellte Diebstahlsicherung automatisch aktiviert wird. Alternativ hierzu ist es nach dem erfindungsgemäßen System auch vorgesehen, dass schon die Betätigung der Schaltereinheit durch den Benutzer die Inbetriebnahmemöglichkeit der Antriebseinheit des Motorrads automatisch deaktiviert und eine etwaige nochmalige Betätigung der Schaltereinheit durch den Benutzer innerhalb des ersten Zeitintervalls die Inbetriebnahmemöglichkeit der Antriebseinheit des Motorrads wieder aktiviert.

Wenn der Benutzer dann die transportable Funkvorrichtung wieder aktiviert und eine Authentifizierungsinformation an die Steuervorrichtung übertragen hat, kann die Steuervorrichtung die Inbetriebnahmemöglichkeit der Antriebseinheit des Motorrads aktivieren, sodass das Motorrad betriebsbereit wird.

Schließlich ist es nach einer Weiterbildung der Erfindung auch vorgesehen, dass die Betriebsmodi mindestens einen Zustand des Motorrads umfassen, ausgewählt aus einem der nachfolgenden Zustände:
- die Antriebseinheit des Motorrads wird in Antriebsbereitschaft oder außer Antriebsbereitschaft versetzt
- eine Wegfahrsperreinrichtung des Motorrads wird aktiviert oder deaktiviert
- eine Lenkersperreinrichtung des Motorrads wird aktiviert oder deaktiviert
- eine Verriegelung eines eine Kraftstoffeinfüllöffnung eines Kraftstofftanks des Motorrads lösbar verschließenden Tankdeckels wird aktiviert oder deaktiviert
- eine Verriegelung eines Verschlusses einer Gepäckaufbewahrungseinrichtung des Motorrads wird aktiviert oder deaktiviert
- eine Verriegelung eines Verschlusses einer Sitzbankanordnung des Motorrads wird aktiviert oder deaktiviert
- eine Steuervorrichtung zur Inbetriebnahme der Antriebseinheit des Motorrads wird aktiviert oder deaktiviert.

Die Erfindung wird im Folgenden anhand der Zeichnung näher erläutert. Diese zeigt in:
Fig. 1 eine schematische Darstellung eines Systems mit einem Motorrad und einer transportablen Funkvorrichtung gemäß einer Ausführungsform nach der vorliegenden Erfindung;
Fig. 2 eine Draufsichtansicht von oben auf eine schematische Darstellung einer Lenkersperreinrichtung am Motorrad;
Fig. 3 eine schematische Darstellung einer Tankdeckelverriegelung am Motorrad;
Fig. 4 eine schematische Darstellung eines Topcases sowie eines Seitenkoffers mit einer jeweiligen Verriegelungseinrichtung;
Fig. 5 eine schematische Darstellung einer Sitzbankanordnung mit einer Verriegelung; und
Fig. 6 ein Ablaufschema hinsichtlich der Funktionsweise des Systems.

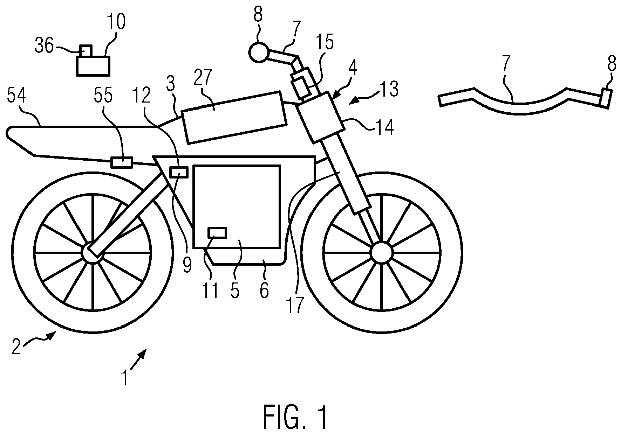

Fig. 1 der Zeichnung zeigt ein System 1 mit einem schematisch dargestellten Motorrad 2 und einer transportablen Funkvorrichtung 10.

Das Motorrad 2 weist einen Motorradrahmen 3 mit einer Lenkkopflageraufnahme 4 und einer Antriebseinheit 5 auf, bei der es sich bei der dargestellten Ausführungsform des Systems 1 um einen Verbrennungsmotor 6 handelt.

Darüber hinaus weist das Motorrad 2 eine Lenkerstange 7 mit einer daran angeordneten Schaltereinheit 8 auf, die bei der dargestellten Ausführungsform des Motorrads 2 am rechten Ende der Lenkerstange 7 angeordnet ist. Das Motorrad 2 weist darüber hinaus eine schematisch dargestellte Steuervorrichtung 9 auf, die zur drahtlosen Kommunikation mit der transportablen Funkvorrichtung 10 ausgebildet ist und darüber hinaus Betriebsmodi des Motorrads 2 steuern kann, wie dies nachfolgend noch näher erläutert werden wird.

Die Funkvorrichtung 10 ist zur drahtlosen Kommunikation mit der Steuervorrichtung 9 eingerichtet und kann über eine von der Steuervorrichtung 9 an die Funkvorrichtung 10 übertragene Sperrinformation in einen Ruhemodus versetzt werden, wobei die Funkvorrichtung 10 dann, wenn sie sich im Ruhemodus befindet, keine drahtlose Kommunikationsverbindung mit der Steuervorrichtung 9 mehr aufbaut und insbesondere keine Authentifizierungsinformation mehr an die Steuervorrichtung 9 überträgt, sodass diese Authentifizierungsinformation auch nicht mehr über einen nicht autorisierten Empfänger aufgenommen werden kann und somit auch die Gefahr von Relayattacken verringert wird.

Das System 1 umfasst auch eine lediglich schematisch dargestellte Wegfahrsperreinrichtung 11, bei der es sich um eine Einrichtung handeln kann, die einem Motorsteuergerät 12, welches Teil der Steuervorrichtung 9 sein kann, eine Freigabe erteilen kann, ohne die der Verbrennungsmotor 6 nicht gestartet werden kann beziehungsweise ohne die ein Elektromotor als Antriebseinheit 5 keine Antriebsenergie bereitstellen kann. Diese Freigabe für das Motorsteuergerät 12 kann über ein am Motorrad 2 vorgesehenes Fahrzeug-Bussystem in der Form beispielsweise eines CAN-Bus übertragen werden, wobei die Freigabe für das Motorsteuergerät 12 dann nicht erfolgt, wenn die Wegfahrsperreinrichtung 11 dies unterbindet.

Die Wegfahrsperreinrichtung 11 kann auch in die Steuervorrichtung 9 integriert ausgebildet sein und von der transportablen Funkvorrichtung 10 codiert, also verschlüsselt übertragene Authentifizierungsinformationen zur Auswertung der Berichtigung des Benutzers benutzen und eine Freigabe an das Motorsteuergerät 12 in der Form einer codierten, also kryptographisch abgesicherten Freigabekommunikationsinformation an das Motorsteuergerät 12 übertragen.

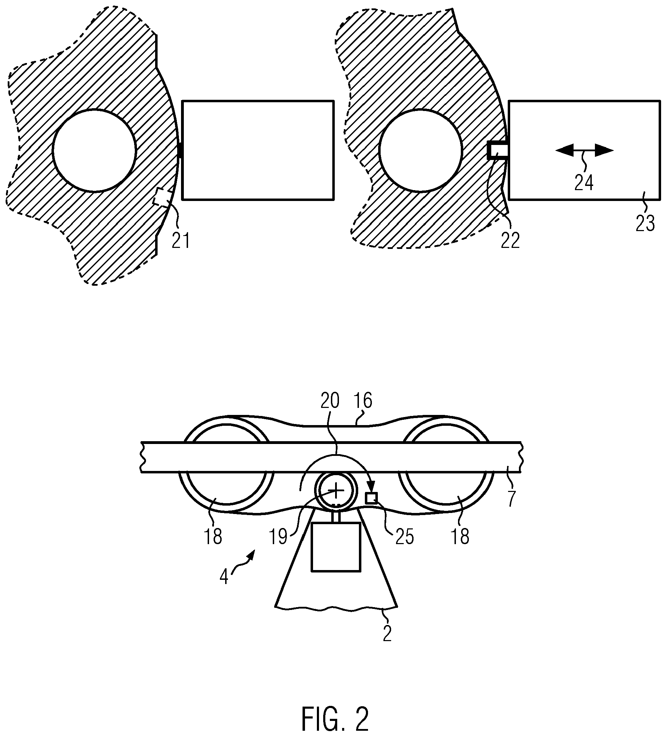

Der Motorradrahmen 3 ist mit der Lenkkopflageraufnahme 4 in der Form eines mit einem Lenkkopflager 13 ausgestatteten Lenkkopflagerrohrs 14 versehen, welches näher noch anhand von Fig. 2 der Zeichnung ersichtlich ist und mit einer in Fig. 1 lediglich schematisch dargestellten Lenkersperreinrichtung 15 versehen ist.

Diese Lenkersperreinrichtung 15 ist in der Form einer mechanischen Verriegelung ausgebildet, welche nachfolgend unter Bezugnahme auf Fig. 2 der Zeichnung noch näher erläutert werden wird.

Fig. 2 der Zeichnung zeigt dabei in der unteren Zeichnung eine schematische Darstellung der Lenkerstange 7 und einer oberen Gabelbrücke 16, welche der Aufnahme der in Fig. 1 lediglich schematisch dargestellten Teleskopfedergabel 17 mit den beiden Teleskopfedergabelbeinen 18 dient, wobei die Teleskopfedergabel 17 um einen vom Lenkkopflager 14 ausgebildeten Drehpunkt 19 herum verschwenkbar ist, wie dies anhand des Pfeils 20 nach Fig. 2 der Zeichnung ersichtlich ist.

Die Lenkkopflageraufnahme 4 ist benachbart zum Motorradrahmen 3 angeordnet und umfasst die Gabelbrücke 16, welche, wie dies anhand der oberen Darstellung der Fig. 2 der Zeichnung ersichtlich ist, eine Ausnehmung 21 aufweist, in die ein Bolzen 22 eingreifen kann, der mittels einer elektrisch betätigten Betätigungseinrichtung 23 in Richtung des Doppelpfeils 24 verlagert werden kann, um die Lenkersperreinrichtung 15 zu verriegeln, wie dies in der rechten Hälfte der oberen Darstellung der Fig. 2 der Zeichnung ersichtlich ist oder die Verriegelungsstellung der Lenkersperreinrichtung 15 aufzuheben, wie dies anhand der linken Hälfte der oberen Darstellung der Fig. 2 der Zeichnung ersichtlich ist.

Die Steuervorrichtung 9 kann die Betätigung der Betätigungseinrichtung 23 überwachen und so feststellen, ob sich die Lenkersperreinrichtung 15 in der verriegelten oder in der nicht verriegelten Stellung befindet. Die Steuervorrichtung 9 kann die Betätigungseinrichtung 23 auch zur Bewegung des Bolzens 22 in Richtung des Doppelpfeils 24 ansteuern, also die Verriegelungsstellung der Lenkersperreinrichtung 15 herbeiführen und die Verriegelungsstellung auch aufheben. Auf diese Weise kann die Steuervorrichtung 9 diesen Betriebsmodus des Motorrads 2 steuern.

Es ist auch vorgesehen, dass die Verschwenkbewegung der Gabelbrücke 16 gemäß dem Pfeil 20 durch einen Sensor in der Form beispielsweise eines Drehwinkelsensors 25 erfasst wird, sodass die Aktivierung der Betätigungseinrichtung 23 zur Verlagerung des Bolzens 22 zur Herbeiführung einer Eingriffsstellung des Bolzens 22 mit der Ausnehmung 21 nur dann stattfindet, wenn eine Überdeckung des Bolzens 22 mit der Ausnehmung 21 durch den Drehwinkelsensor 25 von der Steuervorrichtung 9 festgestellt worden ist.

Die Steuervorrichtung 9 ist also dazu eingerichtet, die Lenkersperreinrichtung 15 zu aktivieren, wenn der Benutzer des Systems 1 die Schaltereinheit 8 betätigt hat und auf diese Weise dem System 1 mitgeteilt hat, dass es sich beispielsweise für eine Fahrpause oder nach der Beendigung der Fahrt mit dem Motorrad 2 in einen Ruhemodus versetzen soll, also Diebstahlssicherungsmaßnahmen ergriffen werden sollen, welche neben der Aktivierung der Wegfahrsperreinrichtung 11 auch die Aktivierung der Lenkersperreinrichtung 15 umfassen, also die Verriegelungsstellung des Bolzens 22 in der Ausnehmung 21 herbeigeführt werden soll.

Zu diesem Zweck ist es bei dem erfindungsgemäßen System auch vorgesehen, dass der Benutzer des erfindungsgemäßen Systems an einer Displayeinheit 26 eine Information in der Form beispielsweise einer Textnachricht erhält, die Überdeckungsstellung des Bolzens 22 mit der Ausnehmung 21 herbeizuführen, indem der Benutzer den Lenkeinschlag der Lenkerstange 7 in Richtung nach links bis zu beispielsweise einer Anschlagstellung vergrößern soll. Dieser Textnachricht kann auch eine weitere Textnachricht des Systems 1 an den Benutzer folgen, die die erfolgreiche Herbeiführung der Überdeckungsstellung bestätigt.

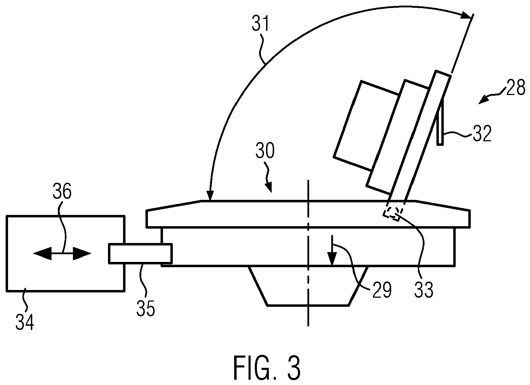

Wie es sich darüber hinaus anhand von Fig. 1 der Zeichnung ergibt, weist das Motorrad 2 bei der dargestellten Ausführungsform mit einem Verbrennungsmotor 6 als Antriebseinheit 5 auch einen Kraftstofftank 27 auf, der mit einem anhand von Fig. 3 der Zeichnung ersichtlichen Tankdeckel 28 verschlossen werden kann. Fig. 3 der Zeichnung zeigt dabei die geöffnete Stellung des Tankdeckels 28 an, sodass Kraftstoff in den Kraftstofftank 7 in Richtung des Pfeils 29 eingefüllt werden kann.

Zu diesem Zweck kann der Benutzer des Motorrads 2 die Kraftstoffeinfüllöffnung 30 durch eine Verschwenkbewegung des Tankdeckels 28 in Richtung des Pfeils 31 nach Fig. 3 freigeben, indem der Benutzer eine Klappe 32 des Tankdeckels 28 betätigt und den Tankdeckel 28 an dem Scharnier 33 zur Herbeiführung der Öffnungsstellung verschwenkt.

Wenn sich das Motorrad 2 in einer Außerbetriebsstellung befindet und Maßnahmen gegen einen Diebstahl oder eine Manipulation an dem Motorrad 2 ergriffen sind, ist der Tankdeckel 28 über eine schematisch dargestellte elektrische Betätigungseinrichtung 34 gesichert, indem die Betätigungseinrichtung 34 einen lediglich schematisch dargestellten Bolzen 35 zur Herbeiführung einer Verriegelungsstellung des Bolzens 35 mit dem Tankdeckel 28 betätigt, sodass der Tankdeckel 28 nicht geöffnet werden kann.

Zu diesem Zweck kann die Steuervorrichtung 9 nach der Betätigung der Schaltereinheit 8 durch den Benutzer die Betätigungseinrichtung 34 den Bolzen 35 zur Herbeiführung der Verriegelungsstellung des Bolzens 35 mit dem Tankdeckel 28 betätigen.

Möchte der Benutzer die Fahrt mit dem Motorrad 2 wieder aufnehmen, so betätigt der Benutzer eine Taste 36 an der transportablen Funkvorrichtung 10, was dazu führt, dass die Funkvorrichtung 10 eine entsprechende Authentifizierungsinformation an die Steuervorrichtung 9 drahtlos sendet und daraufhin die Steuervorrichtung 9 die Betätigungseinrichtung 34 ansteuert, sodass der Bolzen 35 aus der Verriegelungsstellung mit dem Tankdeckel 28 in eine entriegelte Stellung bewegt wird und somit der Tankdeckel 28 über die Klappe 32 wieder geöffnet werden kann. Die Betätigungseinrichtung 34 kann also den Bolzen 35 in Richtung des Doppelpfeils 36 in beide Richtungen bewegen.

Die Steuervorrichtung 9 ist dazu eingerichtet, den Betriebsmodus des Tankdeckels 28 zu steuern, also den Betriebsmodus des Tankdeckels 28 dahingehend zu ändern, dass dieser über die Klappe 32 geöffnet werden kann oder nicht geöffnet werden kann. Wenn der Benutzer die Schaltereinheit 8 zur Herbeiführung des Ruhemodus des Systems 1 beziehungsweise des Motorrads 2 betätigt hat, kann die Steuervorrichtung 9 die Betätigungseinrichtung 34 zur Herbeiführung der Verriegelungsstellung des Bolzens 35 mit dem Tankdeckel 28 ansteuern und wenn der Benutzer des Systems 1 beziehungsweise des Motorrads 2 die Taste 36 an der transportablen Funkvorrichtung 10 zur Wiederaufnahme der Fahrt mit dem Motorrad 2 betätigt hat und die Funkvorrichtung 10 eine von der Steuervorrichtung 9 dann als gültig erkannte Authentifizierungsinformation übersandt hat, kann die Steuervorrichtung 9 die Betätigungseinrichtung 34 zur Aufhebung der Verriegelungsstellung des Bolzens 35 mit dem Tankdeckel 28 ansteuern.

Die Steuervorrichtung 9 ist also dazu eingerichtet, den Betriebsmodus des Systems 1 hinsichtlich der Verriegelung der Kraftstoffeinfüllöffnung 30 des Kraftstofftanks 27 zu steuern und zu überwachen.

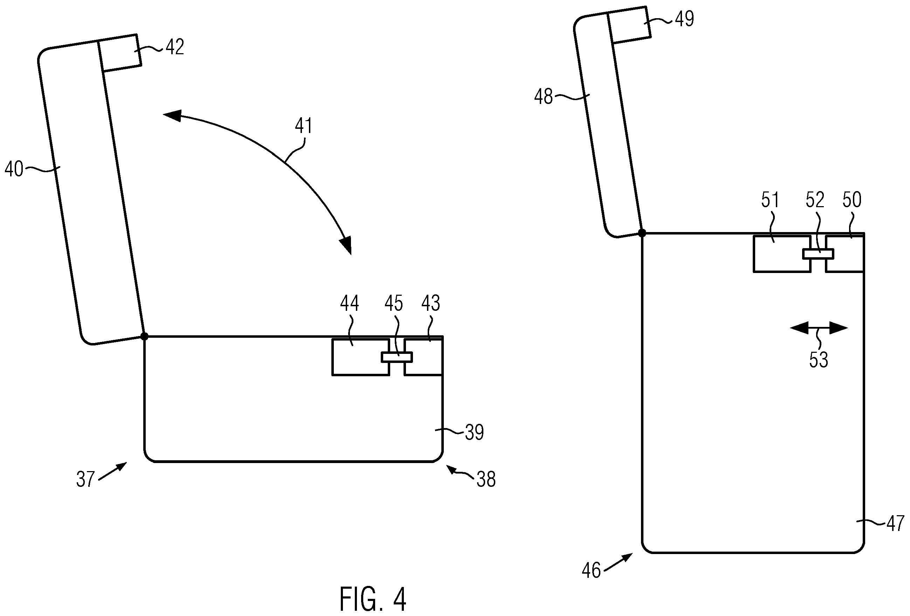

Fig. 4 der Zeichnung zeigt eine schematische Darstellung einer Gepäckaufbewahrungseinrichtung 37 für das Motorrad 2 und zwar in der Form eines in der linken Hälfte der Zeichnung nach der Fig. 4 dargestellten Topcases 38. Das Topcases 38 weist eine untere Schale 39 sowie eine obere Schale 40 auf, die relativ zu unteren Schale 39 in Richtung des Doppelpfeils 41 verschwenkt werden kann, um das Topcase 38 zu öffnen oder zu verschließen.

In der verschlossenen Stellung des Topcases 38, in der die obere Schale 40 an der unteren Schale 39 aufliegt, kommt eine Lasche 42 der oberen Schale 40 in eine Eingriffsstellung mit einer Ausnehmung 43 der unteren Schale 39 und über eine lediglich schematisch dargestellte elektrische Betätigungseinrichtung 44 kann ein Bolzen 45 von der Betätigungseinrichtung 44 zur Herbeiführung einer Eingriffsstellung zwischen dem Bolzen 45 und der Lasche 42 verlagert werden und so das Topcase 38 gegen unbefugten Eingriff verriegelt werden.

Die Steuervorrichtung 9 ist dazu eingerichtet, nach einer entsprechenden Betätigung der Schaltereinheit 8 durch den Benutzer die elektrische Betätigungseinrichtung 44 zur Herbeiführung einer Verriegelungsstellung zwischen dem Bolzen 45 und der Lasche 42 anzusteuern. Auch ist die Steuervorrichtung 9 dazu eingerichtet, die Verriegelungsstellung zwischen dem Bolzen 45 und der Lasche 42 wieder aufzuheben, wenn ein Benutzer des erfindungsgemäßen Systems 1 beziehungsweise des Motorrads 2 die Taste 36 an der transportablen Funkvorrichtung 10 betätigt hat und somit eine von der Steuervorrichtung 9 als gültig überprüfte Authentifizierungsinformation an die Steuervorrichtung 9 übertragen hat und diese die Betätigungseinrichtung 44 daraufhin zur Aufhebung der Verriegelungsstellung zwischen dem Bolzen 45 und der Lasche 42 ansteuert.

Die Steuervorrichtung 9 ist daher dazu eingerichtet, den Betriebsmodus der Verriegelung des Verschlusses der Gepäckaufbewahrungseinrichtung 37 zu überwachen und zu steuern.

Vorstehend wurde die Gepäckaufbewahrungseinrichtung 37 anhand eines Topcases 38 erläutert. Das Motorrad 2 nach dem erfindungsgemäßen System 1 kann anstelle des oder zusätzlich zum Topcase 38 als Gepäckaufbewahrungseinrichtung auch einen anhand von Fig. 4 der Zeichnung in der rechten Hälfte der Zeichnung ebenfalls dargestellten Seitenkoffer 46 aufweisen.

Der Seitenkoffer 46 weist dabei eine untere Schale 47 und eine daran verschwenkbar angelenkte obere Schale 48 auf, welche gleichzeitig den Deckel des Seitenkoffers 46 bildet.

Der Deckel 48 weist eine Lasche 48 auf, welche in einer geschlossenen Stellung des Seitenkoffers 46 in einer Ausnehmung 50 des Seitenkoffers 46 zu liegen kommt. Ähnlich, wie dies vorstehend bei dem Topcase 38 bereits geschildert wurde, besitzt auch der Seitenkoffer 46 eine elektrische betätigbare Betätigungseinrichtung 51, mittels der ein Bolzen 52 in Richtung des Doppelpfeils 53 verlagert werden kann und zwar so, dass der Bolzen 52 mit der Lasche 49 eine Verriegelungsstellung einnimmt oder aus der Verriegelungsstellung wieder gelöst werden kann.

Zur Herbeiführung der Verriegelungsstellung kann die Steuereinrichtung 9 die Betätigungseinrichtung 51 so ansteuern, dass diese den Bolzen 52 in die Verriegelungsstellung mit der Lasche 49 des Deckels 48 verlagert. Wenn die Verriegelungsstellung zwischen der Lasche 49 und dem Bolzen 52 aufgehoben werden soll, kann die Steuervorrichtung 9 den Bolzen 52 über eine entsprechende Ansteuerung der Betätigungseinrichtung 51 aus der Eingriffsstellung mit der Lasche 49 heraus verlagern.

Wenn der Benutzer des erfindungsgemäßen Systems 1 das Motorrad 2 in eine Parkstellung oder Außerbetriebsstellung versetzen möchte, kann er dazu die Schaltereinheit 8 betätigen, wodurch gleichzeitig die Sperrinformation an die transportable Funkvorrichtung 10 übertragen wird und diese sich nach Ablauf des ersten Zeitintervalls in den Ruhemodus versetzt.

Die Betätigung der Schaltereinheit 8 führt auch dazu, dass die Steuervorrichtung 9 die Betätigungseinrichtung 51 zur Verlagerung des Bolzens 52 in die Verriegelungsstellung des Bolzens 52 mit der Lasche 49 ansteuert.

In ähnlicher Weise führt die Betätigung der Schaltereinheit 8 auch dazu, dass die Steuervorrichtung 9 die Wegfahrsperreinrichtung 11 aktiviert, die Lenkersperreinrichtung 15 aktiviert und die Verriegelung des Tankdeckels 28 aktiviert, indem der Bolzen 35 in die Verriegelungsstellung mit dem Tankdeckel verlagert wird.

Die Betätigung der Schaltereinheit 8 führt auch dazu, dass an der Displayeinheit 26 eine entsprechende Meldung in der Form einer Textnachricht an den Benutzer ausgegeben wird, die diesen darüber informiert, dass er den Ruhemodus der transportablen Funkvorrichtung 10 aktiviert hat und darüber hinaus die Diebstahlsicherungsmechanismen beziehungsweise Mechanismen zur Sicherung des Motorrads 2 beziehungsweise des Systems 1 gegen Manipulation oder Diebstahl aktiviert hat, indem die Wegfahrsperreinrichtung aktiviert wird und/oder die Lenkersperreinrichtung aktiviert wird und/oder der Tankdeckel verriegelt wird und/oder das Topcase und/oder der Seitenkoffer beziehungsweise weitere Gepäckaufbewahrungseinrichtungen verriegelt werden und/oder die Sitzbankanordnung des Motorrads verriegelt wird.

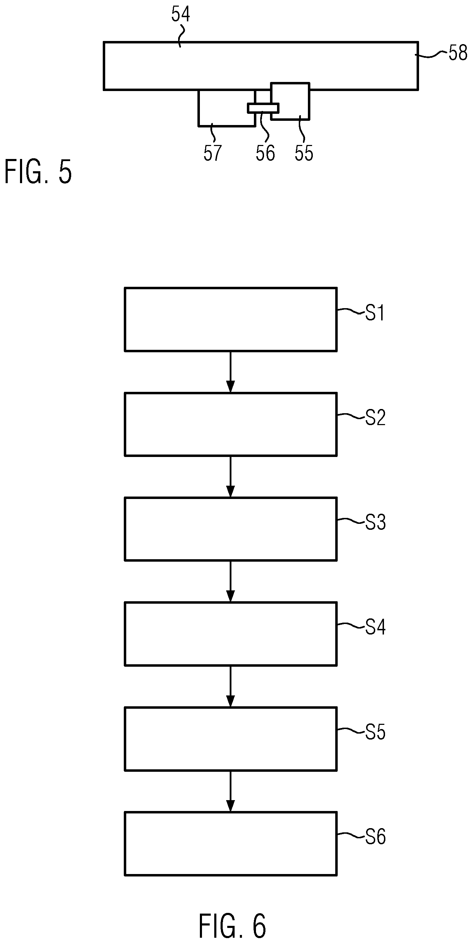

Das Motorrad 2 weist nämlich auch eine Sitzbankanordnung 54 auf, welche schematisch in Fig. 1 der Zeichnung dargestellt ist und ebenfalls schematisch nochmals in Fig. 5 der Zeichnung dargestellt ist. Das Motorrad 2 weist neben der Sitzbankanordnung 54 auch eine elektrisch betätigbare Betätigungseinrichtung 55 auf, die mit einem von dieser verlagerbaren Bolzen 56 versehen ist, der mit einem in Fig. 5 der Zeichnung schematisch dargestellten Rahmenbauteil 57 des Motorradrahmens 3 in einen lösbaren Eingriff gebracht werden kann.

Wenn der Benutzer die Schaltereinheit 8 betätigt, führt dies neben den vorstehend beschriebenen Mechanismen gegen eine Manipulation am Motorrad 2 oder gegen einen Diebstahl des Motorrads 2 dazu, dass die Steuervorrichtung 9 die Betätigungseinrichtung 55 derart ansteuert, dass diese den Bolzen 56 in eine Verriegelungsstellung mit dem Rahmenbauteil 57 des Motorradrahmens 3 verlagert.

Die Sitzbank 58 der Sitzbankanordnung 54 kann dann nicht mehr geöffnet werden und ein Zugang zu unter der Sitzbank 58 angeordneten Bauteilen oder Einrichtungen des Motorrads 2, wie beispielsweise einem Sicherungskasten, einem Gepäckraum oder dergleichen ist dann für unbefugte Dritte nicht mehr möglich.

Wenn der Benutzer des erfindungsgemäßen Systems 1 beziehungsweise des Motorrads 2 das Fahrzeug in eine Betriebsstellung versetzen möchte und er hierzu die Taste 36 der transportablen Funkvorrichtung 10 betätigt hat und daraufhin die transportable Funkvorrichtung 10 eine von der Steuervorrichtung 9 als gültig bestätigte Authentifizierungsinformation übersandt hat, kann die Steuervorrichtung 9 die Betätigungseinrichtung 55 zur Verlagerung des Bolzens 56 aus der Eingriffsstellung mit dem Rahmenbauteil 57 in eine entriegelte Stellung verlagern, sodass der Benutzer wieder unbeschränkten Zugang zu unter der Sitzbank 58 angeordneten Einrichtungen des Motorrads 2 hat.

Die Steuervorrichtung 9 ist also auch dazu eingerichtet, den Betriebsmodus des Systems 1 beziehungsweise Motorrads 2 hinsichtlich der Verriegelungsstellung des Verschlusses der Sitzbankanordnung zu überwachen und zu steuern.

Wenn der Benutzer des erfindungsgemäßen Systems 1 die Schaltereinheit 8 zur Aktivierung des Ruhemodus der transportablen Funkvorrichtung 10 betätigt hat, führt dies auch dazu, dass die Steuervorrichtung 9 eine Startfreigabe zur Inbetriebnahme der Antriebseinheit 5 nicht mehr erteilt und somit die Antriebseinheit nicht mehr aktiviert werden kann. Wenn der Benutzer die Antriebseinheit zwar deaktiviert hat, also beispielsweise den Verbrennungsmotor abgestellt hat, die Schaltereinheit 8 zur Aktivierung des Ruhemodus der transportablen Funkvorrichtung 10 aber nicht betätigt hat, kann der Benutzer den Verbrennungsmotor nach einer Ausführungsform des erfindungsgemäßen Systems nach wie vor starten und in Betrieb nehmen, was beispielsweise bei einem längeren Halt vor einer die Weiterfahrt des Fahrzeugs versperrenden Lichtzeichenanlage von Vorteil ist.

Fig. 6 der Zeichnung zeigt ein Ablaufschema zur weiteren Erläuterung des Systems nach der vorliegenden Erfindung.

In einem Schritt S1 überwacht das System 1 nach der Erfindung eine Aktivierung der Anforderung, die transportable Funkvorrichtung 10 in den Ruhemodus zu versetzen. Hierzu kann das System 1 eine Betätigung der Schaltereinheit 8 durch den Benutzer des Motorrads 2 überwachen.

Mit der Betätigung der Schaltereinheit 8 startet das erste Zeitintervall T1, bis zu dessen Ablauf der Benutzer eine etwaige versehentliche Betätigung der Schaltereinheit 8 und damit eine Aktivierung des Ruhemodus der transportablen Funkvorrichtung 10 durch eine weitere Betätigung der Schaltereinheit 8 widerrufen kann.

Es ist nach dem erfindungsgemäßen System auch vorgesehen, dass dieses erste Zeitintervall T1 durch den Benutzer des Systems verändert werden kann, beispielsweise über eine entsprechende Veränderung des Zeitintervalls mittels einer Bedienung der Displayeinheit 26 am Motorrad 2.

Das Zeitintervall T1 kann nach dem erfindungsgemäßen System von der Steuervorrichtung 9 an die transportable Funkvorrichtung 10 übertragen werden. Dies kann beispielsweise durch eine entsprechende Betätigung der Schaltereinheit 8 durch den Benutzer des Motorrads erfolgen.

Das System 1 ermöglicht es also dem Benutzer, über eine entsprechende Aktivierung der Steuervorrichtung 9 das erste Zeitintervall an die transportable Funkvorrichtung 10 zu übertragen, wobei zusammen mit der Übertragung des ersten Zeitintervalls T1 an die transportable Funkvorrichtung 10 oder auch vor oder nach der Übertragung des ersten Zeitintervalls T1 an die Funkvorrichtung 10 eine Sperrinformation an die Funkvorrichtung 10 übertragen werden kann, wobei die Übertragung dieser Sperrinformation dazu führt, dass sich die transportable Funkvorrichtung 10 in den Ruhemodus versetzt, in welchem die transportable Funkvorrichtung 10 keine Kommunikationsverbindung mit der Steuervorrichtung 9 mehr aufzubauen versucht, also insbesondere auch keine Authentifizierungsinformation mehr an die Steuervorrichtung 9 überträgt.

Wenn eine entsprechende Sperrinformation von der Steuervorrichtung 9 an die transportable Funkvorrichtung 10 übertragen wurde und das erste Zeitintervall T1 abgelaufen ist, versetzt sich die transportable Funkvorrichtung 10 automatisch in einen Ruhemodus und in diesem Ruhemodus reagiert die transportable Funkvorrichtung auch nicht mehr auf entsprechende Kommunikationsanfragen durch die Steuervorrichtung 9. Die transportable Funkvorrichtung 10 sendet in diesem Ruhemodus auch keine Authentifizierungsinformationen mehr an die Steuervorrichtung 9, sodass diese auch nicht mehr durch einen unberechtigten Dritten empfangen werden können.

Es ist bei dem erfindungsgemäßen System nach einer Weiterbildung auch vorgesehen, dass die transportable Funkvorrichtung 10 nach dem Empfang der Sperrinformation von der Steuervorrichtung 9 eine Empfangsquittungsinformation an diese übersenden kann, was beispielsweise auch als Bestätigung der Aktivierung des Ruhemodus für den Benutzer des erfindungsgemäßen Systems als Empfangsquittung in der Displayeinheit 26 des Motorrads 2 angezeigt werden kann.

In einem nächsten Schritt S2 kann die Steuervorrichtung 9 das Zündungsfreigabesignal T15 des Motorrads 2 deaktivieren und die Wegfahrsperreinrichtung 11 aktivieren.

Auch kann die Steuervorrichtung 9 die Lenkersperreinrichtung 15 des Motorrads 2 aktivieren, wie dies vorstehend bereits erläutert wurde. Hierzu kann das System 1 beispielsweise über die Displayeinheit 26 des Motorrads 2 an den Benutzer des Fahrzeugs auch einen Hinweis abgeben, dass dieser den Lenkeinschlag der Lenkerstange 7 so vergrößern soll, dass eine Überdeckungsstellung zwischen dem Bolzen 22 der Lenkersperreinrichtung 15 und der Ausnehmung 21 der Gabelbrücke 16 herbeigeführt wird, was das erfindungsgemäße System 1 beispielsweise über den Drehwinkelsensor 25 überwachen kann, sodass das System 1 nach der Feststellung, dass die Überdeckungsstellung herbeigeführt wurde und das Zündungssystem des Fahrzeugs deaktiviert worden ist, die Verriegelungsstellung des Bolzens 22 mit der Ausnehmung 21 automatisch herbeiführen kann, was beispielsweise auch über eine entsprechende Nachricht an den Benutzer des Fahrzeugs über die Displayeinheit 26 kommuniziert werden kann.

In einem nächsten Schritt S3 kann die Steuervorrichtung 9 die Verriegelungsstellung des Tankdeckels 28 herbeiführen, indem die Betätigungseinrichtung 34 zur Verlagerung des Bolzens 35 in die Verriegelungsstellung des Bolzens 35 mit dem Tankdeckel 28 angesteuert wird.

Auch kann das erfindungsgemäße System 1 in einem nächsten Schritt S4 das Gepäckaufbewahrungssystem des Motorrads 2 sichern, indem die Steuervorrichtung 9 die Betätigungseinrichtung 44 und/oder 51 zur Verlagerung des Bolzens 45 und/oder 52 so ansteuert, dass der jeweilige Bolzen 45 und/oder 52 mit der jeweiligen Lasche 42 und/oder 49 eine Verriegelungsstellung einnimmt und somit ein unautorisierter Zugriff auf das Topcase 38 und/oder den Seitenkoffer 46 nicht mehr möglich ist. In diesem Schritt S4 kann die Steuervorrichtung 9 auch eine Verriegelung der Sitzbankanordnung 54 herbeiführen, wie dies vorstehend bereits erläutert worden ist.

Schließlich kann das erfindungsgemäße System in einem Schritt S5 auch die Übertragung eines Freigabesignals an das Motorsteuergerät 12 unterbinden, wobei dies nach einer alternativen Vorgehensweise auch bereits zusammen mit dem Schritt S1 erfolgen kann.

Vorstehend wurde erwähnt, dass das erfindungsgemäße System in dem Schritt S1 das erste Zeitintervall T1, welches nach der vorliegenden Erfindung beispielsweise eine Zeitdauer von einschließlich 1 Sekunde bis einschließlich 10 Sekunden umfassen kann, an die transportable Funkvorrichtung 10 übertragen kann, wobei in dem Schritt S1 auch eine Zeitintervallinformation an die transportable Funkvorrichtung bezüglich des zweiten Zeitintervalls T2 übertragen werden kann.

Auch dieses zweite Zeitintervall T2, welches nach der vorliegenden Erfindung beispielsweise eine Zeitdauer von einschließlich 5 Sekunden bis einschließlich 60 Sekunden umfassen kann, kann in dem Schritt S1 von der Steuervorrichtung 9 an die transportable Funkvorrichtung 10 übertragen werden. Diese Übertragung des zweiten Zeitintervalls T2 kann beispielsweise vor der Übertragung oder nach der Übertragung oder zusammen mit der Übertragung der Sperrinformation an die transportable Funkvorrichtung 10 erfolgen, es ist nach dem erfindungsgemäßen System 1 auch vorgesehen, dass die Zeitintervallinformation bezüglich des ersten Zeitintervalls T1 und/oder des zweiten Zeitintervalls T2 bei jeder Übertragung oder bei einer bestimmten Anzahl oder Auswahl von Übertragungen der Sperrinformation von der Steuervorrichtung 9 an die transportable Funkvorrichtung 10 übertragen wird.

Wenn der Benutzer des erfindungsgemäßen Systems 1 das Motorrad 2 wieder in einen aktivierten Zustand überführen möchte, um beispielsweise die Fahrt mit dem Motorrad 2 fortzusetzen, betätigt der Benutzer die Taste 36 an der transportablen Funkvorrichtung 10, was dazu führt, dass die transportable Funkvorrichtung 10 entsprechende Kommunikationsanfragen von der Steuervorrichtung 9 an die transportable Funkvorrichtung 10 wieder beantwortet und insbesondere auch eine Authentifizierungsinformation an die Steuervorrichtung 9 überträgt.

In einem Schritt S6 führt der Empfang der Authentifizierungsinformation und deren Bestätigung durch die Steuervorrichtung 9 als gültige Authentifizierungsinformation dazu, dass die Steuervorrichtung 9 die Antriebseinheit 5 des Motorrads 2 in Antriebsbereitschaft versetzt, indem eine Freigabeinformation an das Motorsteuergerät 12 erfolgt, sodass der Benutzer die Antriebseinheit 5 in Betrieb nehmen kann, beispielsweise also den Verbrennungsmotor 6 starten kann.

Die Steuervorrichtung 9 kann nach dem Empfang der Authentifizierungsinformation und deren Bestätigung als gültig die Wegfahrsperreinrichtung 11 des Motorrads deaktivieren und die Lenkersperreinrichtung 15 des Motorrads deaktivieren und auch die Verriegelung des Tankdeckels 28 deaktivieren und die Verriegelung der Gepäckaufbewahrungseinrichtung des Motorrads deaktivieren, d. h. die Verriegelung des Topcases und/oder die Verriegelung des Seitenkoffers deaktivieren und darüber hinaus kann die Steuervorrichtung 9 auch das Öffnen der Sitzbankanordnung des Motorrads wieder zulassen, indem die Verriegelung des Verschlusses des Sitzbankanordnung deaktiviert wird.

Der Benutzer kann auch das Zeitintervall T2 beispielsweise über eine Betätigung der Displayeinrichtung des Motorrads verändern und beispielsweise an seine Bedürfnisse anpassen.

Wenn sich das Motorrad im Zustand der Außerbetriebsstellung mit aktivierten Diebstahlsicherungsmechanismen in einer Umgebung befindet, in der ein unautorisierter Zugriff auf das Motorrad durch Dritte unwahrscheinlich ist, kann der Benutzer beispielsweise einen längeren Zeitraum T2 bevorzugen als dies in einer Umgebung der Fall ist, in der ein unautorisierter Zugriff auf das Motorrad durch Dritte wahrscheinlicher ist.

Nach dem Ablauf des Zeitraums T2 versetzt sich nämlich die transportable Funkvorrichtung wieder in den Ruhemodus, in dem eine Kommunikation mit der Steuervorrichtung 9 nicht mehr stattfindet und somit von der Steuervorrichtung 9 das Motorrad 2 wieder in die Außerbetriebsstellung versetzt wird, also beispielsweise die Wegfahrsperre wieder aktiviert wird und/oder vom Benutzer auswählbare Betriebsmodi des Motorrads herbeigeführt werden. Wenn der Benutzer des Motorrads das Motorrad innerhalb des einstellbaren Zeitraums T2 in Betrieb nimmt, beispielsweise also den Verbrennungsmotor startet, steht das Motorrad zum bestimmungsgemäßen Betrieb zur Verfügung und die transportable Funkvorrichtung nimmt nicht den Ruhemodus ein.

Wenn hingegen die transportable Funkvorrichtung unbeabsichtigt aktiviert wurde, nachdem sie vorher deaktiviert wurde und den Ruhemodus eingenommen hat, also die Taste 36 der Funkvorrichtung 10 in unbeabsichtigter Weise betätigt wurde, weil sich die Funkvorrichtung beispielsweise in einer Tasche der Motorradbekleidung des Benutzers befunden hat und die Funkvorrichtung durch eine Bewegung des Benutzers in unbeabsichtigter Weise aktiviert wurde und dies in Reichweite der Funkverbindung zur Steuervorrichtung geschah, stellt der zweite Zeitraum T2 sicher, dass die drahtlose Kommunikation zwischen der transportablen Funkvorrichtung und der Steuervorrichtung nach Ablauf des Zeitraums T2 wieder unterbrochen wird und somit für Dritte keine Möglichkeit besteht, eine von der Funkvorrichtung an die Steuervorrichtung drahtlos übertragene Authentifizierungsinformation zu protokollieren und danach für Missbrauchszwecke zu benutzen.

Der Benutzer kann nach dem erfindungsgemäßen System über eine Einstellung des Systems 1 beispielsweise über die Displayeinheit des Motorrads Änderungen an der Reaktion des Systems 1 auf den Empfang der Authentifizierungsinformation nach Aufhebung des Ruhemodus durch die transportable Funkvorrichtung vornehmen.

Auch diese Möglichkeit wirkt für den Benutzer komforterhöhend, da der Benutzer auswählen kann, welchen Betriebsmodus das Motorrad nach dem Empfang der Authentifizierungsinformation einnehmen soll. Der Benutzer kann also auswählen, ob der Empfang der Authentifizierungsinformation und deren Bestätigung durch die Steuervorrichtung als gültig dazu führt, dass die Antriebseinheit in Antriebsbereitschaft versetzt wird und/oder die Wegfahrsperreinrichtung des Motorrads deaktiviert wird und/oder die Lenkersperreinrichtung des Motorrads deaktiviert wird und/oder die Verriegelung des Tankdeckels deaktiviert wird und/oder die Verriegelung des Verschlusses des Gepäckaufbewahrungssystems deaktiviert wird und/oder die Verriegelung der Sitzbankanordnung deaktiviert wird.

Der Benutzer kann also die Betriebsmodi des Motorrads ganz nach seinen Bedürfnissen anpassen, die er vom Motorrad erwartet, wenn er die transportable Funkeinrichtung aktiviert hat und damit dem System seinen Wunsch mitgeteilt hat, die Fahrt mit dem Motorrad zu beginnen oder fortzusetzen.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

1. System
2. Motorrad
3. Motorradrahmen
4. Lenkkopflageraufnahme
5. Antriebseinheit
6. Verbrennungsmotor
7. Lenkerstange
8. Schaltereinheit
9. Steuervorrichtung
10. Funkvorrichtung
11. Wegfahrsperreinrichtung
12. Motorsteuergerät
13. Lenkkopflager
14. Lenkkopflagerohr
15. Lenkersperreinrichtung
16. Gabelbrücke
17. Teleskopfedergabel
18. Teleskopfedergabelbein
19. Drehpunkt
20. File
21. Ausnehmung
22. Bolzen
23. Betätigungseinrichtungen
24. Doppelpfeil
25. Drehwinkelsensor
26. Displayeinheit
27. Kraftstofftank
28. Tankdeckel
29. Pfeil
30. Kraftstoffeinfüllöffnung
31. Pfeil
32. Klappe
33. Scharnier
34. Betätigungseinrichtung
35. Bolzen
36. Taste
37. Gepäckaufbewahrungseinrichtung
38. Topcase
39. Schale
40. Schale
41. Doppelpfeil
42. Lasche
43. Ausnehmung
44. Betätigungseinrichtung
45. Bolzen
46. Seitenkoffer
47. Schale
48. Schale, Deckel
49. Lasche
50. Ausnehmung
51. Betätigungseinrichtung
52. Bolzen
53. Doppelpfeil
54. Sitzbankanordnung
55. Betätigungseinrichtung
56. Bolzen
57. Rahmenbauteil
58. Sitzbank

## Patentansprüche

1. System (1) mit einem Motorrad (2) und einer transportablen Funkvorrichtung (10), wobei das Motorrad (2) einen Motorradrahmen (3) mit einer Lenkkopflageraufnahme (4) und eine Antriebseinheit (5) sowie eine Schaltereinheit (8) und eine Steuervorrichtung (9) aufweist und die Steuervorrichtung (9) zur drahtlosen Kommunikation mit der Funkvorrichtung (10) und zur Steuerung von Betriebsmodi des Motorrads (2) in Abhängigkeit einer von der Funkvorrichtung (10) zur Steuervorrichtung (9) übertragenen Authentifizierungsinformation eingerichtet ist und die Steuervorrichtung (9) zur drahtlosen Übertragung einer die Funkvorrichtung (10) in einen Ruhemodus versetzenden Sperrinformation zur Funkvorrichtung (10) eingerichtet ist, in dem eine Kommunikation der Funkvorrichtung (10) an die Steuervorrichtung (9) unterbleibt, **dadurch gekennzeichnet, dass** die Steuervorrichtung (9) zur drahtlosen Übertragung einer ersten und/oder zweiten Zeitintervallinformation betreffend die Länge eines ersten (T1) und/oder zweiten (T2) Zeitintervalls an die Funkvorrichtung (10) eingerichtet ist, nach deren Ablauf die Funkvorrichtung (10) den Ruhemodus einnimmt und dass das Motorrad (2) dazu eingerichtet ist, die Steuervorrichtung (9) in Folge einer Betätigung der Schaltereinheit (8) zur drahtlosen Übertragung der Sperrinformation und/oder der Zeitintervallinformation anzusteuern.

2. System (1) nach Anspruch 1, **dadurch gekennzeichnet, dass** die Steuervorrichtung (9) zur gleichzeitigen oder konsekutiven Übertragung der Sperrinformation und der ersten und/oder zweiten Zeitintervallinformation an die Funkvorrichtung (10) eingerichtet ist.

3. System (1) nach Anspruch 1 oder 2, **dadurch gekennzeichnet,dass** die Steuervorrichtung (9) zur veränderbaren Einstellung der ersten und/oder zweiten Zeitintervallinformation eingerichtet ist.

4. System (1) nach einem der vorstehenden Ansprüche, **dadurch gekennzeichnet, dass** die Steuervorrichtung (9) zum drahtlosen Empfang einer von der Funkvorrichtung (10) nach dem Empfang der Sperrinformation und/oder ersten und/oder zweiten Zeitintervallinformation übertragenen Empfangsquittungsinformation an die Steuervorrichtung (9) eingerichtet ist.

5. System (1) nach einem der vorstehenden Ansprüche, **dadurch gekennzeichnet, dass** die Funkvorrichtung (10) zum Verlassen des Ruhemodus und zur drahtlosen Übertragung der Authentifizierungsinformation in Folge einer die Aktivierung der Funkvorrichtung (10) auslösenden Betätigung der Funkvorrichtung (10) durch einen Benutzer der Funkvorrichtung (10) eingerichtet ist.

6. System (1) nach einem der vorstehenden Ansprüche, **dadurch gekennzeichnet, dass** die Steuervorrichtung (9) zur drahtlosen Übertragung einer Betriebsmodusinformation an die Funkvorrichtung (10) eingerichtet ist, nach deren Empfang die Funkvorrichtung (10) in einem die Kommunikation mit der Steuervorrichtung (9) aufrecht erhaltenden Kommunikationsmodus verbleibt.

7. System (1) nach einem der vorstehenden Ansprüche, **dadurch gekennzeichnet, dass** die Steuervorrichtung (9) zur drahtlosen Übertragung einer Betriebsmodusinformation an die Funkvorrichtung (10) innerhalb des zweiten Zeitintervalls (T2) eingerichtet ist, nach deren Empfang die Funkvorrichtung (10) in einem die Kommunikation mit der Steuervorrichtung (9) aufrecht erhaltenden Kommunikationsmodus verbleibt.

8. System (1) nach Anspruch 6 oder 7, **dadurch gekennzeichnet, dass** die Funkvorrichtung (10) dazu eingerichtet ist, bei Ausbleiben der Betriebsmodusinformation innerhalb des zweiten Zeitintervalls (T2) nach Ablauf des zweiten Zeitintervalls (T2) in den Ruhemodus zu wechseln, in dem in dem eine Kommunikation der Funkvorrichtung (10) an die Steuervorrichtung (9) unterbleibt.

9. System (1) nach einem der vorstehenden Ansprüche, **dadurch gekennzeichnet, dass** das Motorrad (2) eine Wegfahrsperreinrichtung (11) aufweist, welches die Antriebseinheit (5) des Motorrads (2) in einen Betriebszustand versetzt, in dem eine Fortbewegung des Motorrads (2) mit einer von der Antriebseinheit (5) bereit gestellten Antriebsenergie unterbunden ist.

10. System (1) nach einem der vorstehenden Ansprüche, **dadurch gekennzeichnet, dass** das Motorrad (2) eine Lenkersperreinrichtung (15) aufweist, die mit einem fernsteuerbaren, insbesondere elektrisch betätigt verriegelbaren und entriegelbaren Bolzen (22) versehen ist, der mit einer Ausnehmung (21) der Lenkkopflageraufnahme (4) oder einer Einrichtung (16) in eine lösbare Eingriffsstellung bringbar ist und die Steuervorrichtung (9) zur Überwachung der Eingriffsstellung eingerichtet ist.

11. System (1) nach einem der vorstehenden Ansprüche, **dadurch gekennzeichnet, dass** das Motorrad (2) einen Kraftstofftank (27) mit einer Kraftstoffeinfüllöffnung (30) und mit einer die Kraftstoffeinfüllöffnung (30) lösbar verschließenden Tankdeckelanordnung (28) aufweist und die Tankdeckelanordnung (28) mit einem fernsteuerbaren, insbesondere elektrisch betätigt verriegelbaren und entriegelbaren Bolzen (35) versehen ist, der mit einer Ausnehmung des Kraftstofftanks (27) oder der Tankdeckelanordnung (28) in eine lösbare Eingriffsstellung bringbar ist und die Steuervorrichtung (9) zur Überwachung der Eingriffsstellung eingerichtet ist.

12. System (1) nach einem der vorstehenden Ansprüche, **dadurch gekennzeichnet, dass** das Motorrad (2) eine Gepäckaufbewahrungseinrichtung (37) aufweist, welche mit einem mit einer lösbaren verriegelbar ausgebildeten Verschlusseinrichtung versehen ist, die mit einem fernsteuerbaren, insbesondere elektrisch betätigt verriegelbaren und entriegelbaren Bolzen (45, 52) versehen ist, der mit einer Einrichtung (42, 49) der Verschlusseinrichtung in eine lösbare Eingriffsstellung bringbar ist und die Steuervorrichtung (9) zur Überwachung der Eingriffsstellung eingerichtet ist.

13. System (1) nach einem der vorstehenden Ansprüche, **dadurch gekennzeichnet, dass** das Motorrad (2) mit einer Sitzbankanordnung (54) versehen ist, welche mit einem fernsteuerbaren, insbesondere elektrisch betätigt verriegelbaren und entriegelbaren Bolzen (56) versehen ist, der mit einer am Motorradrahmen (2) angeordneten Ausnehmung (57) in eine lösbare Eingriffsstellung bringbar ist und die Steuervorrichtung (9) zur Überwachung der Eingriffsstellung eingerichtet ist.

14. System (1) nach einem der vorstehenden Ansprüche, **dadurch gekennzeichnet, dass** das Motorrad (2) mit einer Steuervorrichtung (12) zur Inbetriebnahme der Antriebseinheit des Motorrads versehen ist.

15. System (1) nach einem der vorstehenden Ansprüche, **dadurch gekennzeichnet, dass** die Betriebsmodi mindestens einen Zustand des Motorrads (2) umfassen, ausgewählt aus einem der nachfolgenden Zustände:
- die Antriebseinheit (5) des Motorrads (2) wird in Antriebsbereitschaft oder außer Antriebsbereitschaft versetzt
- eine Wegfahrsperreinrichtung (11) des Motorrads (2) wird aktiviert oder deaktiviert
- eine Lenkersperreinrichtung (15) des Motorrads (2) wird aktiviert oder deaktiviert
- eine Verriegelung eines eine Kraftstoffeinfüllöffnung (30) eines Kraftstofftanks (27) des Motorrads (2) lösbar verschließenden Tankdeckels (28) wird aktiviert oder deaktiviert
- eine Verriegelung eines Verschlusses einer Gepäckaufbewahrungseinrichtung (37) des Motorrads (2) wird aktiviert oder deaktiviert
- eine Verriegelung eines Verschlusses einer Sitzbankanordnung (54) des Motorrads (2) wird aktiviert oder deaktiviert
- eine Steuervorrichtung (12) zur Inbetriebnahme der Antriebseinheit (5) des Motorrads (2) wird aktiviert oder deaktiviert.

## Claims

1. System (1) having a motorbike (2) and a transportable radio device (10), wherein the motorbike (2) has a motorbike frame (3), having a steering head bearing mount (4) and a drive unit (5), and a switch unit (8) and a control device (9), and the control device (9) is equipped to wirelessly communicate with the radio device (10) and to control operating modes of the motorbike (2) depending on authentication information transmitted from the radio device (10) to the control device (9), and the control device (9) is equipped to wirelessly transmit to the radio device (10) blocking information which puts the radio device (10) into a standby mode, in which standby mode a communication of the radio device (10) with the control device (9) ceases, **characterised in that** the control device (9) is equipped to wirelessly transmit first and/or second time interval information relating to the length of a first (T1) and/or second (T2) time interval to the radio device (10), after the elapse of which time interval(s) the radio device (10) goes into the standby mode, and **in that** after the switch unit (8) is operated, the motorbike (2) is equipped to direct the control device (9) to wirelessly transmit the blocking information and/or the time interval information.

2. System (1) according to claim 1, **characterised in that** the control device (9) is equipped to simultaneously or consecutively transmit the blocking information and the first and/or second time interval information to the radio device (10).

3. System (1) according to claim 1 or 2, **characterised in that** the control device (9) is equipped to alterably adjust the first and/or second time interval information.

4. System (1) according to one of the preceding claims, **characterised in that** the control device (9) is equipped to wirelessly receive delivery receipt information transmitted to the control device (9) from the radio device (10) after the blocking information and/or first and/or second time interval information is received.

5. System (1) according to one of the preceding claims, **characterised in that** the radio device (10) is equipped to exit the standby mode and to wirelessly transmit the authentication information after an operation of the radio device (10) by a user of the radio device (10) triggers the activation of the radio device (10).

6. System (1) according to one of the preceding claims, **characterised in that** the control device (9) is equipped to wirelessly transmit operating mode information to the radio device (10), after the receipt of which operating mode information the radio device (10) remains in a communication mode which maintains the communication with the control device (9).

7. System (1) according to one of the preceding claims, **characterised in that** the control device (9) is equipped to wirelessly transmit operating mode information to the radio device (10) within the second time interval (T2), after the receipt of which operating mode information the radio device (10) remains in a communication mode which maintains the communication with the control device (9).

8. System (1) according to claim 6 or 7, **characterised in that** the radio device (10) is equipped to switch into the standby mode after the second time interval has (T2) elapsed if the operating mode information is absent within the second time interval (T2), in which standby mode a communication of the radio device (10) with the control device (9) ceases.

9. System (1) according to one of the preceding claims, **characterised in that** the motorbike (2) has an immobilising device (11), which sets the drive unit (5) of the motorbike (2) to an operating state in which a continued movement of the motorbike (2) with drive energy provided by the drive unit (5) is suppressed.

10. System (1) according to one of the preceding claims, **characterised in that** the motorbike (2) has a handlebars blocking device (15), which is provided with a remote-controllable, in particular electrically operated lockable and unlockable bolt (22), which can be brought into a releasable engagement position with a recess (21) of the steering head bearing mount (4) or a device (16), and the control device (9) is equipped to monitor the engagement position.

11. System (1) according to one of the preceding claims, **characterised in that** the motorbike (2) has a fuel tank (27) having a fuel filling opening (30) and having a fuel cap arrangement (28) which releasably closes the fuel filling opening (30), and the fuel cap arrangement (28) is provided with a remote-controllable bolt (35), which can in particular be locked and unlocked by electric actuation and which can be brought into a releasable engagement position with a recess of the fuel tank (27) or the fuel cap arrangement (28), and the control device (9) is equipped to monitor the engagement position.

12. System (1) according to one of the preceding claims, **characterised in that** the motorbike (2) has a luggage storage device (37), which is provided with a closing device designed such that it can be releasably locked, said closing device being provided with a remote-controllable bolt (45, 52) which can in particular be locked and unlocked by electric actuation, and which can be brought into a releasable engagement position with a device (42, 49) of the closing device, and the control device (9) is equipped to monitor the engagement position.

13. System (1) according to one of the preceding claims, **characterised in that** the motorbike (2) is provided with a seat arrangement (54), said seat arrangement being provided with a remote-controllable bolt (56) which can in particular be locked and unlocked by electric actuation, and which can be brought into a releasable engagement position with a recess (57) arranged on the motorbike frame (2), and the control device (9) is equipped to monitor the engagement position.

14. System (1) according to one of the preceding claims, **characterised in that** the motorbike (2) is provided with a control device (12) for starting up the drive unit of the motorbike.

15. System (1) according to one of the preceding claims, **characterised in that** the operating modes comprise at least one state of the motorbike (2), selected from one of the following states:
- the drive unit (5) of the motorbike (2) is set to be operationally available or operationally unavailable
- an immobilising device (11) of the motorbike (2) is activated or deactivated
- a handlebars blocking device (15) of the motorbike (2) is activated or deactivated
- a bolt of a fuel cap (28) which releasably closes a fuel filling opening (30) of a fuel tank (27) of the motorbike (2) is activated or deactivated
- a bolt of a closure of a luggage storage device (37) of the motorbike (2) is activated or deactivated
- a bolt of a closure of a seat arrangement (54) of the motorbike (2) is activated or deactivated
- a control device (12) for starting up the drive unit (5) of the motorbike (2) is activated or deactivated.

## Revendications

1. Système (1) comprenant un motocycle (2) et un dispositif radio (10) transportable, le motocycle (2) possédant un cadre de motocycle (3), doté d'un support de roulement de colonne de direction (4), et une unité motrice (5) ainsi qu'une unité de commutation (8) et un dispositif de commande (9), le dispositif de commande (9) étant conçu pour une communication sans fil avec le dispositif radio (10) et pour commander les modes de fonctionnement du motocycle (2) en fonction d'une information d'authentification transmise par le dispositif radio (10) à destination du dispositif de commande (9), et le dispositif de commande (9) est conçu pour une transmission sans fil, auprès du dispositif radio (10), d'une information de blocage qui met le dispositif radio (10) dans un mode veille dans lequel aucune communication entre le dispositif radio (10) et le dispositif de commande (9) n'est possible, **caractérisé en ce que** le dispositif de commande (9) est conçu pour une transmission sans fil, auprès du dispositif radio (10), d'une première et/ou d'une deuxième information d'intervalle de temps concernant la longueur d'un premier (T1) et/ou d'un deuxième (T2) intervalle de temps après l'écoulement duquel le dispositif radio (10) passe en mode veille, et **en ce que** le motocycle (2) est conçu pour commander le dispositif de commande (9) à la suite d'un actionnement de l'unité de commutation (8) visant à transmettre sans fil les informations de verrouillage et/ou les informations d'intervalle de temps.

2. Système (1) selon la revendication 1, **caractérisé en ce que** le dispositif de commande (9) est conçu pour une transmission simultanée ou consécutive de l'information de blocage et de la première et/ou de la deuxième information d'intervalle de temps auprès du dispositif radio (10).

3. Système (1) selon la revendication 1 ou 2, **caractérisé en ce que** le dispositif de commande (9) est conçu pour un réglage variable de la première et/ou de la deuxième information d'intervalle de temps.

4. Système (1) selon l'une des revendications précédentes, **caractérisé en ce que** le dispositif de commande (9) est conçu pour la réception sans fil d'une information d'accusé de réception transmise au dispositif de commande (9) par le dispositif radio (10) après réception de l'information de blocage et/ou des première et/ou deuxième informations d'intervalle de temps.

5. Système (1) selon l'une des revendications précédentes, **caractérisé en ce que** le dispositif radio (10) est conçu pour quitter le mode veille et pour une transmission sans fil de l'information d'authentification à la suite d'un actionnement du dispositif radio (10), par l'utilisateur du dispositif radio (10), qui déclenche l'activation du dispositif radio (10).

6. Système (1) selon l'une des revendications précédentes, **caractérisé en ce que** le dispositif de commande (9) est conçu pour une transmission sans fil d'une information de mode de fonctionnement auprès du dispositif radio (10), après réception de laquelle le dispositif radio (10) demeure dans un mode de communication qui maintient la communication avec le dispositif de commande (9).

7. Système (1) selon l'une des revendications précédentes, **caractérisé en ce que** le dispositif de commande (9) est conçu pour une transmission sans fil d'une information de mode de fonctionnement auprès du dispositif radio (10) au cours du deuxième intervalle de temps (T2), après réception de laquelle le dispositif radio (10) demeure dans un mode de communication qui maintient la communication avec le dispositif de commande (9).

8. Système (1) selon la revendication 6 ou 7, **caractérisé en ce que** le dispositif radio (10) est conçu pour passer en mode veille à l'issue du deuxième intervalle de temps (T2) en cas de non-réception d'information de mode de fonctionnement au cours du deuxième intervalle de temps (T2), toute communication entre le dispositif radio (10) et le dispositif de commande (9) étant alors impossible.

9. Système (1) selon l'une des revendications précédentes, **caractérisé en ce que** le motocycle (2) présente un dispositif antidémarrage (11) qui met l'unité motrice (5) du motocycle (2) dans un état de fonctionnement ne permettant pas un déplacement du motocycle (2) à l'aide d'une énergie motrice fournie par l'unité motrice (5).

10. Système (1) selon l'une des revendications précédentes, **caractérisé en ce que** le motocycle (2) présente un dispositif de verrouillage du guidon (15) qui est doté d'un pêne (22) verrouillable et déverrouillable télécommandable, et notamment à commande électrique, qui est susceptible d'être mis en position d'enclenchement sélectif avec un évidement (21) du support de roulement de colonne de direction (4) ou d'un dispositif (16), et le dispositif de commande (9) est conçu pour surveiller ladite position d'enclenchement.

11. Système (1) selon l'une des revendications précédentes, **caractérisé en ce que** le motocycle (2) présente un réservoir de carburant (27) doté d'une ouverture de remplissage de carburant (30) et d'un système de bouchon de réservoir (28) qui ferme de manière sélective l'ouverture de remplissage de carburant (30), et le système de bouchon de réservoir (28) est doté d'un pêne (35) verrouillable et déverrouillable télécommandable, et notamment à commande électrique, qui est susceptible d'être mis en position d'enclenchement sélectif avec un évidement du réservoir de carburant (27) ou du système de bouchon de réservoir (28), et le dispositif de commande (9) est conçu pour surveiller ladite position d'enclenchement.

12. Système (1) selon l'une des revendications précédentes, **caractérisé en ce que** le motocycle (2) présente un compartiment à bagages (37) doté d'un dispositif de fermeture conçu pour être verrouillable de manière sélective et lui-même doté d'un pêne (45, 52) verrouillable et déverrouillable télécommandable, et notamment à commande électrique, qui est susceptible d'être mis en position d'enclenchement sélectif avec un dispositif (42, 49) du dispositif de fermeture, et le dispositif de commande (9) est conçu pour surveiller ladite position d'enclenchement.

13. Système (1) selon l'une des revendications précédentes, **caractérisé en ce que** le motocycle (2) est doté d'un agencement de siège (54) doté d'un pêne (56) verrouillable et déverrouillable télécommandable, et notamment à commande électrique, qui est susceptible d'être mis en position d'enclenchement sélectif avec un évidement (57) prévu sur le cadre de motocycle (2), et le dispositif de commande (9) est conçu pour surveiller ladite position d'enclenchement.

14. Système (1) selon l'une des revendications précédentes, **caractérisé en ce que** le motocycle (2) est doté d'un dispositif de commande (12) pour démarrer l'unité motrice du motocycle.

15. Système (1) selon l'une des revendications précédentes, **caractérisé en ce que** les modes de fonctionnement comprennent au moins un état du motocycle (2) choisi parmi les états suivants :
- l'unité motrice (5) du motocycle (2) est mise en état de marche ou hors d'état de marche
- un dispositif antidémarrage (11) du motocycle (2) est activé ou désactivé
- un dispositif de blocage du guidon (15) du motocycle (2) est activé ou désactivé
- un verrou d'un capuchon de réservoir (28) fermant sélectivement une ouverture de remplissage de carburant (30) d'un réservoir de carburant (27) du motocycle (2) est activé ou désactivé
- un verrouillage d'un organe de fermeture d'un compartiment à bagages (37) du motocycle (2) est activé ou désactivé
- un verrouillage d'un organe de fermeture de l'agencement de siège (54) du motocycle (2) est activé ou désactivé
- un dispositif de commande (12) permettant de démarrer l'unité motrice (5) du motocycle (2) est activé ou désactivé.
